# FASCICULE DE BREVET EUROPEEN

(11) **EP 3 025 057 B1**
(45) Date de publication et mention de la délivrance du brevet: **17.05.2017**
(21) Numéro de dépôt: 14738555.3
(22) Date de dépôt: 11.06.2014
(51) Int. Cl.: F04B 7/00, F04B 7/06, F04B 13/02, F04B 53/14, F16K 11/076, F16K 11/085, F04B 9/04

(54) **SOUS-ENSEMBLE OSCILLO-ROTATIF ET DISPOSITIF POUR MULTIPLEXAGE FLUIDIQUE ET POMPAGE VOLUMÉTRIQUE CO-INTÉGRÉS D'UN FLUIDE**
OSZILIERENDE UND ROTIERENDE UNTER-EINHEIT UND EINE CO-INTEGRIERTE VORRICHTUNG ZUM FLUIDISCHEN MULTIPLEXEN UND VOLUMETRISCHEN FÖRDERN EINES FLUIDS
RECIPROCATING AND ROTATING SUB-GROUP AND A CO-INTEGRATED DEVICE FOR FLUIDIC MULTIPLEXING AND VOLUMETRIC PUMPING OF A FLUID

(30) Priorité: 22.07.2013 FR 1357188
(43) Date de publication de la demande: 01.06.2016
(73) Titulaire: Eveon, 38330 Montbonnot Saint Martin (FR)
(72) Inventeur: BEARD, Jean-Claude, F-01300 Belley (FR); WATTELLIER, Arnaud, F-38320 Eybens (FR); DEHAN, Christophe, F-38330 Saint Ismier (FR)
(74) Mandataire: Prugneau, Philippe
(86) Numéro de dépôt international: PCT/FR2014/051416
(87) Numéro de publication internationale: WO 2015/011353

(56) Documents cités:
- WO-A1-92/16747
- DE-A1- 3 441 215
- DE-A1- 3 630 528
- DE-A1- 4 409 994
- US-A- 5 494 420

## Description

### Domaine technique

L'invention concerne de façon générale un sous-ensemble oscillo-rotatif pour pompage volumétrique d'un fluide et un dispositif de pompage oscillo-rotatif intégrant un moyen de multiplexage fluidique compact.

### Technique antérieure

L'utilisation de dispositifs de pompage pour la production et/ou la reconstitution (mélanges liquide-solide ou liquide-liquide) et/ou l'administration (injection, infusion, oral, spray, ...), est connue, notamment pour des applications médicales, esthétiques, vétérinaires, pour lesquelles ils permettent l'alimentation en fluide par exemple d'un ou plusieurs dispositifs d'administration.

De manière connue, les dispositifs de pompage comportent un corps pourvu de conduits débouchant dans une cavité recevant un piston avec lequel elle définit une chambre de travail. Le piston est par exemple déplacé selon un mouvement oscillo-rotatif mettant les conduits radiaux successivement en communication fluidique avec la chambre de travail pour aspirer puis refouler le fluide. La configuration fluidique de tels dispositifs de pompage est fixe, à savoir que les conduits sont soit passant (autorisant la communication fluidique), soit non passant (n'autorisant pas la communication fluidique) en fonction de la position du piston. Les possibilités d'utilisation de tels dispositifs de pompage tel que celui décrit par la publication US 3,168,872, sont donc limitées.

Les documents DE 36 30 528 et DE 44 09 994 décrivent aussi des dispositifs de pompage volumétrique d'un fluide.

### Exposé de l'invention

Le but de l'invention est de remédier à cet inconvénient en proposant un sous-ensemble oscillo-rotatif pour pompage volumétrique et un dispositif de pompage oscillo-rotatif permettant de multiplier les conduits externes au sous-ensemble et rendre lesdits conduits sélectivement, passant ou non passant, et ainsi d'augmenter les possibilités de configurations fluidiques de transfert entre ces conduits.

A cet effet, l'invention a pour objet un sous-ensemble oscillo-rotatif pour pompage volumétrique d'un fluide, comportant un corps creux d'axe longitudinal définissant au moins une cavité et dont la paroi est traversée par des conduits, un piston logé dans la cavité avec laquelle il définit une chambre de travail, le piston comportant sur sa périphérie au moins un évidement en communication fluidique avec la chambre de travail, le piston étant apte à être animé d'un mouvement oscillo-rotatif par rapport au corps de sorte à être mobile angulairement entre différentes positions de fonctionnement dans chacune desquelles l'évidement est ou non en regard d'au moins un des conduits et en translation de sorte à faire varier le volume de la chambre de travail pour successivement aspirer puis refouler le fluide, caractérisé en ce que le sous-ensemble oscillo-rotatif comporte une chemise mobile entre le piston et le corps, en ce que la paroi de la chemise est traversée par des orifices, intercalée radialement entre le piston et le corps, et apte à adopter dans le corps, concomitamment à chaque position de fonctionnement, différentes configurations fluidiques successives dans chacune desquelles chaque conduit est sélectivement non passant lorsque la chemise empêche la communication fluidique entre la chambre de travail et le conduit ou passant lorsqu'un orifice de la chemise en regard du conduit autorise la communication fluidique entre la chambre de travail et le conduit.

L'idée à la base de l'invention consiste à prévoir une chemise perforée, disposée entre le corps et le piston, et dont la mobilité par rapport au corps permet d'obturer ou non les conduits de sorte à ce qu'ils soient sélectivement passant ou non passant en fonction de la position de la chemise et de proposer ainsi des configurations fluidiques différentes. La mobilité de la chambre peut-être angulaire ou longitudinale ou une combinaison angulaire et longitudinale.

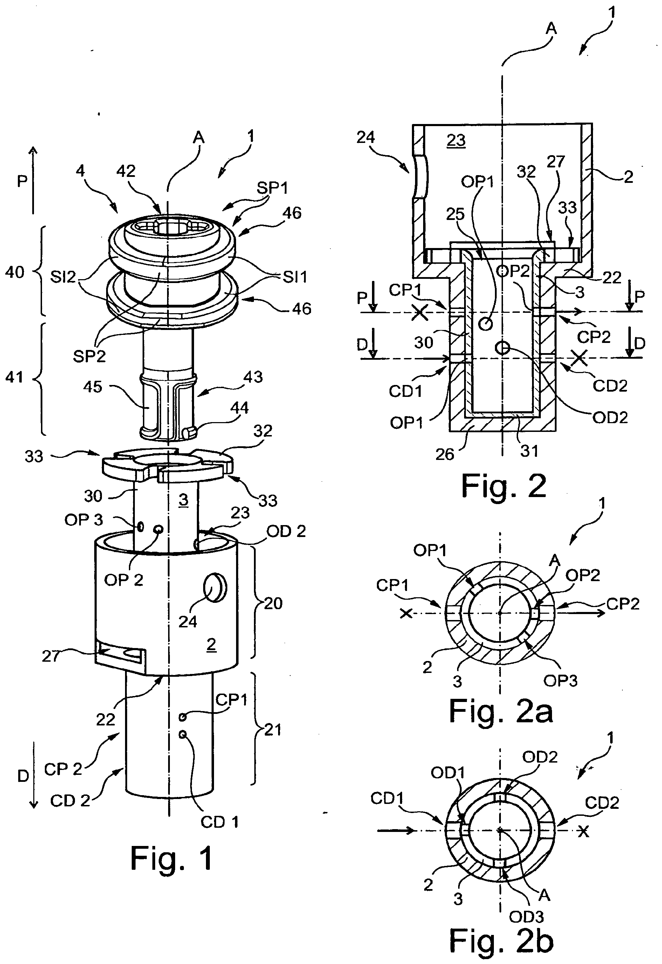

Par convention, pour faciliter la distinction entre les éléments, on utilise dans la suite le terme « distal » pour tout élément orienté dans le sens d'introduction du piston dans le corps et le terme « proximal » pour tout élément orienté à l'opposé. Les directions distale et proximale sont schématisées respectivement par les flèches D et P notamment sur la figure 1. Par ailleurs, on utilise les références CPi, CRi, CSi, CDi pour les conduits en général, l'indice i étant remplacé par un chiffre pour désigner un conduit spécifique. De même, on utilise les références OPi, ORi, OSi, ODi pour les orifices en général, l'indice i étant remplacé par un chiffre pour désigner un orifice spécifique

Le sous-ensemble oscillo-rotatif selon l'invention peut avantageusement présenter les particularités suivantes :
- la chemise est pourvue de formes d'entrainement destinées à être couplées à des moyens de réglage aptes à solliciter les formes d'entrainement pour modifier la position angulaire et / ou longitudinale de la chemise par rapport au corps,
- le nombre des orifices est supérieur au nombre des conduits,
- le corps comporte au moins deux conduits proximaux situés dans un plan radial proximal, au moins deux conduits distaux situés dans un plan radial distal distinct du plan radial proximal, la chemise comporte des orifices proximaux situés dans le plan radial proximal et angulairement décalés entre eux, et des orifices distaux situés dans le plan radial distal et angulairement décalés entre eux,
- les conduits proximaux et distaux et les orifices proximaux et distaux sont angulairement disposés de sorte que la chemise puisse adopter successivement au moins deux des configurations fluidiques suivantes :
   - une première et une cinquième configuration fluidique dans laquelle seul l'un des conduits proximaux est passant, et seul l'un des conduits distaux est passant,
   - une seconde configuration fluidique dans laquelle chacun des conduits proximaux est passant, et chacun des conduits distaux est non passant,
   - une troisième configuration fluidique dans laquelle chacun des conduits proximaux) est non passant, et chacun des conduits distaux est passant,
   - une quatrième configuration fluidique dans laquelle chacun des conduits proximaux et distaux est non passant,
   - une sixième configuration fluidique dans laquelle seul l'un des conduits proximaux est passant, et chacun des conduits distaux est passant,
   - une septième configuration fluidique dans laquelle chacun des conduits proximaux est passant, et seul l'un des conduits distaux est passant,
   - une huitième configuration fluidique dans laquelle chacun des conduits proximaux et distaux est passant,
- le corps comporte au moins un conduit proximal situé dans un plan radial proximal, un conduit distal situé dans un plan radial distal distinct du plan radial proximal, un conduit proximal intermédiaire et un conduit distal intermédiaire situés respectivement dans un plan radial proximal intermédiaire et dans un plan radial distal intermédiaire prévus entre les plans radiaux proximal et distal, la chemise comportant au moins des orifices proximaux situés dans le plan radial proximal, des orifices distaux situés dans le plan radial distal, des orifices intermédiaires proximaux situés dans le plan intermédiaire radial, des orifices intermédiaires distaux situés dans le plan intermédiaire distal,
- les conduits proximal, intermédiaire proximal, intermédiaire distal et distal sont alignés longitudinalement entre eux,
- les conduits proximal, intermédiaire proximal, intermédiaire distal et distal et lesdits orifices proximal, intermédiaire proximal, intermédiaire distal et distal sont angulairement disposés de sorte que ladite chemise puisse adopter successivement au moins deux des configurations fluidiques suivantes :
   - une neuvième configuration fluidique dans laquelle chacun des conduits proximal et distal intermédiaire est non passant, et chacun des conduits proximal intermédiaire et distal est passant,
   - une dixième configuration fluidique dans laquelle chacun des conduits proximal et distal intermédiaire est passant, et chacun des conduits proximal intermédiaire et distal est non passant,
      une onzième configuration fluidique dans laquelle chacun des conduits proximal et distal est passant, et chacun des conduits proximal intermédiaire et distal intermédiaire est non passant, une douzième configuration fluidique dans laquelle chacun des conduits proximal et distal est non passant, et chacun des conduits proximal intermédiaire et distal intermédiaire est passant, une treizième configuration fluidique dans laquelle chacun des conduits proximal, proximal intermédiaire et distal est passant et le conduit distal intermédiaire n'est pas passant,
      une quatorzième configuration fluidique dans laquelle chacun des conduits proximal, distal intermédiaire et distal est passant, et le conduit proximal intermédiaire n'est pas passant,
      une quinzième configuration fluidique dans laquelle chacun des conduits proximal, proximal intermédiaire et distal intermédiaire est passant, et le conduit distal n'est pas passant,
   - une seizième configuration fluidique dans laquelle chacun des conduits proximal, proximal intermédiaire, distal intermédiaire et distal est passant.

L'invention s'étend à un dispositif de pompage oscillo-rotatif pour fluide, caractérisé en ce qu'il comporte des moyens d'entrainement, un sous-ensemble oscillo-rotatif pour pompage d'un fluide tel que décrit et des moyens de couplage mécanique amovibles pour raccorder mécaniquement les moyens d'entrainement audit piston de manière démontable.

Le dispositif de pompage oscillo-rotatif peut comporter un sous-ensemble oscillo-rotatif dont la chemise est pourvue de formes d'entrainement destinées à être couplées à des moyens de réglage, et des moyens de réglage aptes à solliciter les formes d'entrainement pour modifier la position de la chemise par rapport au corps.

### Présentation sommaire des dessins

La présente invention sera mieux comprise et d'autres avantages apparaîtront à la lecture de la description détaillée de plusieurs modes de réalisation pris à titre d'exemples nullement limitatifs et illustrés par les dessins annexés, dans lesquels :
- la figure 1 est une vue en perspective du sous-ensemble oscillo-rotatif selon l'invention avec un corps selon un premier arrangement un piston selon un premier mode de réalisation et une chemise selon un premier agencement, le corps, le piston et la chemise étant illustrés en cours d'assemblage ;
- la figure 2 est une vue en coupe axiale d'une partie du sous-ensemble oscillo-rotatif de la figure 1, la chemise étant représentée dans une première configuration fluidique ;
- les figures 2A et 2B sont des vues en coupe radiale selon respectivement les plans de coupe PP et DD de la figure 2, la chemise étant représentée dans sa première configuration fluidique ;
- les figures 3, 3A, 3B et les figures 4, 4A, 4B sont similaires aux figures 2, 2A, 2B avec la chemise représentée respectivement dans une seconde et une troisième configuration fluidique, le piston n'étant pas représenté ;
- les figures 5 à 10 sont des vues en coupe axiale du sous-ensemble oscillo-rotatif de la figure 4 avec la chemise dans la troisième configuration fluidique, le piston selon le premier mode de réalisation étant illustré en six positions de fonctionnement distinctes d'un cycle de pompage ;
- la figure 11 est une vue en perspective du sous-ensemble oscillo-rotatif selon l'invention avec un corps selon le premier arrangement, un piston selon un second mode de réalisation et une chemise selon un second agencement, le corps, le piston et la chemise étant illustrés en cours d'assemblage ;
- les figures 12 et 13 sont respectivement une vue en perspective partiellement coupée et une vue en coupe axiale du sous-ensemble oscillo-rotatif de la figure 11, la chemise étant représentée dans la troisième configuration fluidique ;
- la figure 14 est une vue en coupe axiale d'une partie du sous-ensemble oscillo-rotatif de la figure 11, la chemise étant représentée dans une quatrième configuration fluidique, le piston n'étant pas représenté ;
- les figures 14A et 14B sont des vues en coupe radiale selon respectivement les plans de coupe PP et DD la figure 14, la chemise étant représentée dans sa quatrième configuration fluidique, le piston n'étant pas représenté ;
- les figures 15, 15A et 15B aux figures 17, 17A et 17B sont similaires aux figures 14, 14A et 14B, la chemise étant respectivement représentée respectivement dans la seconde, une cinquième et la troisième configuration fluidique ;
- les figures 18 à 21 sont des vues schématiques illustrant les étapes d'utilisation du sous-ensemble oscillo-rotatif de la figure 11 avec la chemise successivement dans la quatrième, la seconde, la cinquième et la troisième configuration fluidique ;
- les figures 22, 22A et 22B ; 23, 23A et 23B et 24, 24A et 24B sont des figures similaires aux figures 14, 14A et 14B du sous-ensemble oscillo-rotatif selon l'invention avec un corps selon le premier arrangement un piston (non représenté) selon le second mode de réalisation et une chemise selon un troisième agencement, la chemise étant représentée respectivement dans une sixième, une septième et une huitième configuration fluidique ;
- la figure 25 est une vue en perspective du sous-ensemble oscillo-rotatif selon l'invention avec un corps selon le premier arrangement un piston selon un troisième mode de réalisation et une chemise selon un quatrième agencement, le corps, le piston et la chemise étant illustrés en cours d'assemblage ;
- les figures 26 et 27 sont similaires aux figures 12 et 13 pour le sous-ensemble oscillo-rotatif de la figure 25, la chemise étant représentée dans la première configuration fluidique ;
- la figure 28 est une vue en coupe axiale d'une partie du sous-ensemble oscillo-rotatif de la figure 25, la chemise étant représentée dans la seconde configuration fluidique, le piston n'étant pas représenté ;
- les figures 28A et 28B sont des vues en coupe radiale selon respectivement les plans de coupe PP et DD de la figure 28, la chemise étant représentée dans sa seconde configuration fluidique, le piston n'étant pas représenté ;
- les figures 29, 29A et 29B aux figures 33, 33A et 33B sont similaires aux figures 28, 28A et 28B, la chemise étant représentée respectivement dans la troisième, la première, la huitième, la sixième et une septième configuration fluidique ;
- les figures 34 à 41 sont des schémas illustrant, de la première à la septième configuration fluidique d'un distributeur oscillo-rotatif selon l'invention avec quatre ports, ces schémas sont utilisés comme convention pour différencier entre elles les configurations fluidiques ;
- la figure 42 est une vue en perspective du sous-ensemble oscillo-rotatif selon l'invention, avec un corps selon un second arrangement un piston selon un quatrième mode de réalisation, le corps et le piston étant illustrés en cours d'assemblage, la chemise n'étant pas représentée ;
- les figures 43 et 44 sont des vues en coupe axiale du sous-ensemble oscillo-rotatif de la figure 42 avec une chemise selon un cinquième agencement étant représentée dans une neuvième configuration fluidique ;
- la figure 45 est une vue en coupe axiale d'une partie du sous-ensemble oscillo-rotatif de la figure 42, la chemise étant représentée dans la neuvième configuration fluidique, le piston n'étant pas représenté ;
- les figures 45A, 45B, 45C et 45D sont des vues en coupe radiale selon respectivement les plans de coupe PP, RR, SS et DD de la figure 45, la chemise étant représentée dans sa neuvième configuration fluidique ;
- les figures 46, 46A, 46B, 46C et 46D aux figures 53, 53A, 53B, 53C et 53D sont similaires aux figures 45, 45A, 45B, 45C et 45D, la chemise étant respectivement représentée dans une dixième à dix-septième configurations fluidiques ;
- la figure 54 est une vue en perspective de la chemise du sous-ensemble oscillo-rotatif des figures 42 à 53.

Par souci de clarté, la chemise est représentée noircie sur les différentes coupes radiales. Par ailleurs, les éléments similaires sont affectés sur les figures, des mêmes numéros de référence.

### Description des modes de réalisation

En référence aux figures 1 à 10, le sous-ensemble oscillo-rotatif 1 selon l'invention comprend un corps 2 selon un premier arrangement, une chemise 3 selon un premier agencement, et un piston 4 selon un premier mode de réalisation.

Le corps 2 est creux et formé de deux portions cylindriques 20, 21 illustrées sur la figure 1, de diamètres différents et reliées entre elles par un épaulement 22. Le corps 2 est par exemple réalisé en matériau plastique ou en tout autre matériau adapté. L'intérieur de la portion cylindrique 20 de grand diamètre forme un alésage 23 d'axe longitudinal A. L'extrémité libre de cette portion cylindrique 20 de grand diamètre est ouverte et destinée à recevoir l'engagement longitudinal de la chemise 3 et du piston 4. L'autre extrémité de la portion cylindrique 20 de grand diamètre est raccordée à la portion cylindrique 21 de petit diamètre par l'épaulement 22. La paroi de la portion cylindrique 20 de grand diamètre est traversée par un trou 24 destiné à recevoir un doigt de guidage radial (non illustré) disposé de sorte à dépasser dans l'alésage 23. Le doigt de guidage, par exemple une goupille, peut présenter une section cylindrique ou toute autre section adaptée. Par ailleurs, au niveau de l'épaulement 22, la portion cylindrique 21 de petit diamètre est traversée par une fente 27 visible sur les figures 1 et 2, permettant d'accéder à l'intérieur de l'alésage, et dont la fonction est expliquée plus loin.

L'intérieur de la portion cylindrique 21 de petit diamètre définit une cavité 25 visible sur la figure 2, d'axe longitudinal A et de diamètre inférieur à celui de l'alésage 23. L'extrémité libre de la portion cylindrique 21 de petit diamètre est fermée par un fond 26 visible sur la figure 2. L'alésage 23 et la cavité 25 sont destinés à recevoir la chemise 3 logée dans le corps 2, et le piston 4 logé dans la chemise 3. Le corps 2 délimite ainsi, avec le piston 4 et par l'intermédiaire de la chemise 3, une chambre de travail 5 destiné à recevoir fluide à transférer. La paroi de la portion cylindrique 21 de petit diamètre est traversée par deux paires de conduits CP1, CP2, CD1, CD2 débouchant radialement dans la cavité 25, par exemple de section circulaire et présentant entre eux un même diamètre. Ces conduits CP1, CP2, CD1, CD2 sont coaxiaux deux à deux, diamétralement opposés l'un à l'autre et situés respectivement dans un plan radial proximal PP et dans un plan radial distal DD perpendiculaires à l'axe longitudinal A. Par convention, pour différencier entre eux les conduits et en référence aux figures 1 à 10, on utilise dans la suite les appellations premier et second conduits proximaux CP1, CP2 pour les conduits proximaux dont l'axe est dans un plan radial proximal PP; et premier et second conduits distaux CD1, CD2 pour les conduits dont l'axe est dans un plan radial distal DD. Chacun de ces conduits peut indifféremment être utilisé pour l'admission ou le refoulement en fonction du sens de déplacement du piston 4 dans le corps 2 décrit plus loin. Les conduits peuvent également être disposés selon toute autre configuration adaptée. Ils peuvent par ailleurs être équipés d'embouts permettant leur raccordement fluidique, par l'intermédiaire par exemple d'un tuyau d'admission ou d'un tuyau de refoulement.

En référence en particulier à la figure 1, la chemise 3 selon le premier agencement, est formée par une portion annulaire 30 dont une extrémité est obturée par un fond 31 et dont l'autre extrémité est pourvue d'une collerette 32. La chemise 3 est dimensionnée pour épouser les formes intérieures du corps 2, la collerette 32 reposant sur la face intérieure de l'épaulement 22, le fond 31 de chemise 3 reposant contre le fond 26 du corps 2. La chemise 3 est coaxiale au corps 2 par rapport auquel elle peut tourner sans déplacement longitudinal. A cet effet, la collerette 32 est pourvue de formes d'entrainement 33 aptes à être sollicitées par des moyens de réglage pour modifier la position angulaire de la chemise 3 par rapport au corps 2. A cet effet, les moyens de réglage traversent la fente 27. La paroi de la portion annulaire 30 est traversée par une pluralité d'orifices disposés dans les mêmes plans radiaux proximal PP et distal DD que les conduits proximal CP1, CP2, et distal CD1, CD2, et destinés à être individuellement en regard ou non d'un des conduits. Lorsqu'un orifice OP1, OP2, OP3, OD1, OD2, OD3 est en regard d'un conduit CP1, CP2, CD1, CD2, il autorise le passage du fluide du conduit CP1, CP2, CD1, CD2 vers la cavité 25. Lorsqu'aucun orifice OP1, OP2, OP3, OD1, OD2, OD3 n'est en regard d'un conduit CP1, CP2, CD1, CD2 donné, ce conduit CP1, CP2, CD1, CD2 est alors obturé et le fluide ne peut pas circuler au travers du conduit CP1, CP2, CD1, CD2 vers la cavité 25. Dans l'exemple illustré, la chemise 3 comporte des premier, second et troisième orifices proximaux OP1, OP2, OP3 angulairement répartis dans le plan radial proximal PP et des premier, second et troisième orifices distaux OD1, OD2, OD3 angulairement répartis dans le plan radial distal DD. Tel que visible sur les figures 2A à 4A, le second orifice proximal OP2 est décalé de 135° dans le sens horaire par rapport au premier orifice proximal OP1. Le troisième orifice proximal OP3 est décalé de 45° dans le sens horaire par rapport au second orifice proximal OP2. Tel que visible sur les figures 2B à 4B, le second orifice distal OD2 est décalé de 90° dans le sens horaire par rapport au premier orifice distal OD1. Le troisième orifice distal OD3 est décalé de 180° dans le sens horaire par rapport au second orifice distalOD2. Par ailleurs, le premier orifice distal OD1 est décalé de 45° dans le sens antihoraire par rapport au premier orifice proximal OP1. Les orifices peuvent être disposés de toute autre manière adaptée. Les configurations fluidiques possibles dépendent de la position angulaire respective des orifices et de celle des conduits.

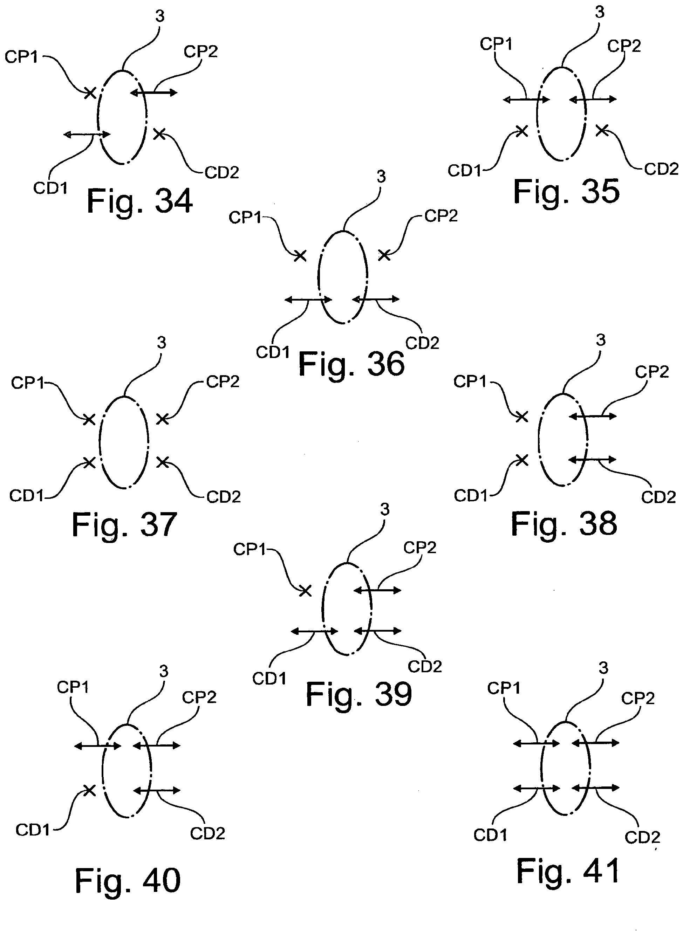

Ainsi, pour un corps comportant quatre conduits les première à huitième configurations fluidiques possibles sont illustrées par les figures 34 à 41. Sur ces figures la chemise 3 est schématisée par le trait mixte fin, chaque non communication fluidique est schématisée par une croix et chaque communication fluidique est schématisée par une flèche double sens. Dans chacune de ces configurations fluidiques, au moins un des orifices est utilisé pour l'admission, un autre pour le refoulement.

En référence à la figure 34, dans la première configuration fluidique, le premier conduit proximal CP1 et le second conduit distal CD2 sont non passants c'est-à-dire que la chemise 3 les obture fluidiquement, le premier conduit distal CD1 et le second conduit proximal CP2 sont passants c'est-à-dire que des orifices proximal et distal de la chemise 3 sont en regard d'eux de sorte à autoriser la communication fluidique avec la cavité 25. Ainsi, dans la première configuration fluidique, le fluide peut être admis par le premier conduit distal CD1 et refoulé par le second conduit proximal CP2 ou inversement. Dans une première configuration fluidique symétrique non représentée, le second conduit proximal CP2 et le premier conduit distal CD1 sont non passants, le premier conduit proximal CP1 et le second conduit distal CD2 sont passants. Ainsi, dans la première configuration fluidique symétrique, le fluide peut être admis par le second conduit distal CD2 et refoulé par le premier conduit proximal CP1 ou inversement.

En référence à la figure 35, dans la deuxième configuration fluidique, les premier et second conduits proximaux CP1, CP2 sont passants, et les premier et second conduits distaux CD1, CD2 sont non passants. Ainsi, dans la deuxième configuration fluidique, le fluide peut être admis par le premier conduit proximal CP1 et refoulé par le second conduit proximal CP2 ou inversement.

En référence à la figure 36, dans la troisième configuration fluidique, les premier et second conduits proximaux CP1, CP2 sont passants, et les premier et second conduits distaux CD1, CD2 sont non passants. Ainsi, dans la troisième configuration fluidique, le fluide peut être admis par le premier conduit distal CD1 et refoulé par le second conduit distal CD2 ou inversement.

En référence à la figure 37, dans la quatrième configuration fluidique, les premier et second conduits proximaux CP1, CP2, et distaux CD1, CD2 sont tous non passants. Ainsi, dans la quatrième configuration fluidique, le fluide ne peut être ni admis ni refoulé. Les premier et second conduits proximaux CP1, CP2, et distaux CD1, CD2 sont donc isolés de la chambre de travail 5.

En référence à la figure 38, dans la cinquième configuration fluidique, les premiers conduits proximal CP1 et distal CD1 sont non passants, les seconds conduits proximal CP2 et distal CD2 sont passants. Ainsi, dans la cinquième configuration fluidique, le fluide peut être admis par le second conduit proximal CP2 et refoulé par le second conduit distal CD2 ou inversement.

En référence à la figure 39, dans la sixième configuration fluidique, le premier conduit proximal CP1 est non passant, le second conduit proximal CP2 et les premier et second conduits distaux CD1, CD2 sont passants. Ainsi, dans la sixième configuration fluidique, le fluide peut être admis par le premier conduit distal CD1 et refoulé par les seconds conduits proximal et distal CP2, CD2 ou inversement. Dans une sixième configuration fluidique symétrique non représentée, le second conduit proximal CP2 est non passant, le premier conduit proximal CP1 les premier et second conduits distaux CD1, CD2 sont passants. Ainsi, dans la sixième configuration fluidique symétrique, le fluide peut être admis par le second conduit distal CD2 et refoulé par les premiers conduits proximal et distal CP1, CD1 ou inversement.

En référence à la figure 40, dans la septième configuration fluidique, les premier et second conduits proximaux CP1, CP2 et le second conduit distal CD2 sont passants, le premier conduit distal CD1 est non passant. Ainsi, dans la septième configuration fluidique, le fluide peut être admis par le premier conduit proximal CP1 et refoulé par les seconds conduits proximal et distal CP2, CD2 ou inversement. Dans une septième configuration fluidique symétrique non représentée, les premier et second conduits proximaux CP1, CP2 et le premier conduit distal CD1 sont passants, le second conduit distal CD2 est non passant. Ainsi, dans la septième configuration fluidique symétrique, le fluide peut être admis par les premiers conduits proximal et distal CP1, CD1 et refoulé par le second conduit proximal CP2 ou inversement.

En référence à la figure 41, dans la huitième configuration fluidique, les premier et second conduits proximaux CP1, CP2 et distaux CD1, CD2 sont tous passants. Ainsi, dans la huitième configuration fluidique, le fluide peut être admis par les premiers conduits proximal et distal CP1, CD1 et refoulé par les seconds conduits proximal et distal CP2, CD2 ou inversement.

Comme détaillé ci-après, le corps 2 selon le premier arrangement et la chemise 3 selon le premier agencement permettent plusieurs configurations fluidiques dont trois sont illustrées et détaillées ci-après en référence aux figures 2 à 4B. Sur ces figures, une flèche orientée vers le corps 2 correspond à l'admission, une flèche orientée à l'opposé correspond au refoulement. Selon le sens de déplacement du piston 4 dans le corps 2, l'admission et le refoulement peuvent être inversés, le sens des flèches étant alors aussi inversé.

En référence aux figures 2, 2A et 2B, la chemise 3 est dans la première configuration fluidique (Cf. figure 34) dans laquelle le premier conduit proximal CP1 est obturé par la chemise 3, le second orifice distal OP2 est en regard du second conduit proximal CP2, le premier orifice distal OD1 est en regard du premier conduit distal CD1, le second conduit distal CD2 est obturé par la chemise 3.

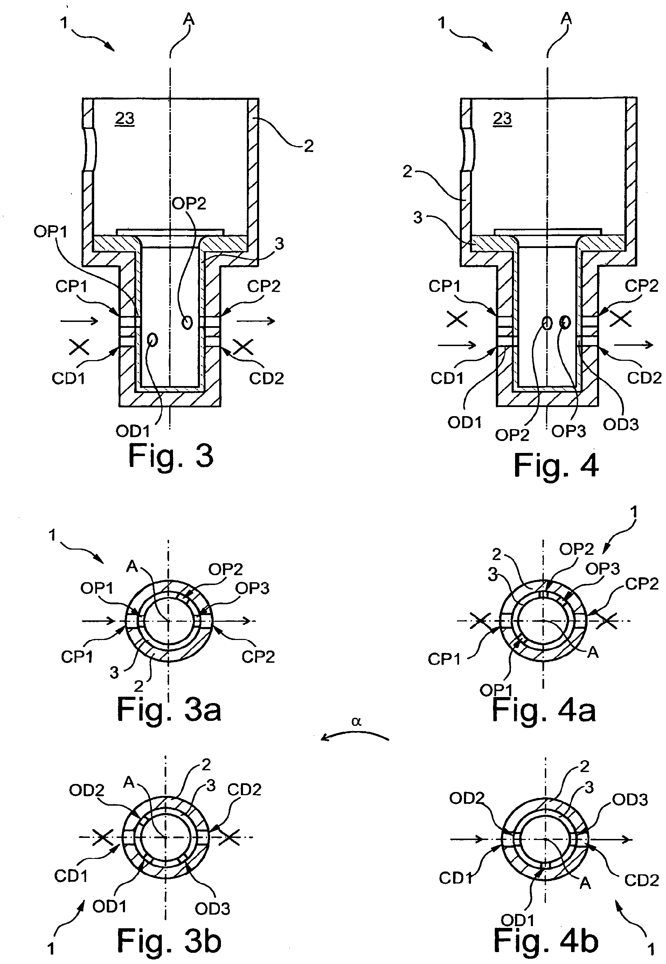

En référence aux figures 3, 3A et 3B, la chemise 3 est dans la seconde configuration fluidique (Cf. figure 35) dans laquelle le premier et le troisième orifice proximal OP1, OP3 sont en regard respectivement du premier et du second conduit proximal CP1, CP2, le premier et le second conduit distal CD1, CD2 sont obturés par la chemise 3. Pour passer de la première à la seconde configuration fluidique, la chemise 3 a été tournée d'un angle α de 45° par rapport au corps dans le sens antihoraire dans un sens d'observation distal.

En référence aux figures 4, 4A et 4B, la chemise 3 est dans la troisième configuration fluidique (Cf. figure 36) dans laquelle le premier et le second conduit proximal CP 1, CP2 sont obturés par la chemise 3, le second orifice distal OD2 est en regard du premier conduit distal CD1 et le troisième orifice distal OD3 est en regard du second conduit distal CD2. Pour passer de la seconde à la troisième configuration fluidique, la chemise 3 a été tournée d'un angle α de 45° par rapport au corps dans le sens antihoraire dans un sens d'observation distal.

Au-delà de cette troisième configuration fluidique, la chemise 3 peut être tournée pour adopter d'autres configurations fluidiques non détaillées.

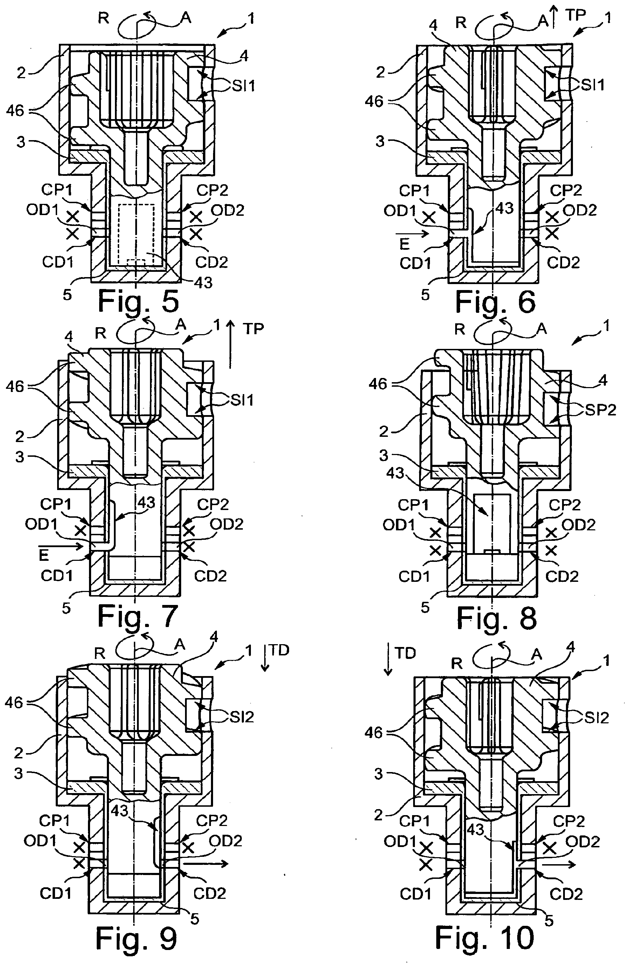

En référence à la figure 1, le piston 4 selon le premier mode de réalisation est formé de deux portions cylindriques 40, 41 de diamètres différents reliées entre elles par un épaulement non détaillé. Le piston 4 est par exemple réalisé en matériau plastique ou en tout autre matériau adapté. La portion cylindrique 40 de grand diamètre du piston 4 présente un diamètre extérieur légèrement inférieur au diamètre de la cavité 25 dans laquelle elle peut ainsi être logée. La portion cylindrique 41 de petit diamètre du piston 4 présente un diamètre extérieur légèrement inférieur au diamètre de la chemise 3 dans laquelle elle peut ainsi être logée. L'extrémité libre de la portion cylindrique 41 de petit diamètre définit, avec le fond du corps 2, une chambre de travail 5 (visible sur les figures 6 à 10) destinée à recevoir le fluide. Par ailleurs, l'extrémité libre de la portion cylindrique 40 de grand diamètre présente un évidement axial 42 visible sur la figure 1, par exemple en forme de croix, apte à recevoir un embout (non représenté) de forme complémentaire couplé à des moyens d'entrainement destinés à faire tourner le piston 4 par rapport au corps 2.

Le piston 4 comporte, sur sa périphérie, un évidement 43. Dans ce mode de réalisation, l'évidement 43 présente la forme d'une rainure s'étendant longitudinalement entre une extrémité fermée orientée vers la portion cylindrique 40 de grand diamètre et une extrémité ouverte débouchant dans la chambre de travail 5. L'évidement 43 s'étend sur une longueur lui permettant, à chaque demi-tour du piston 4 dans le corps 2, d'être en regard successivement des premiers conduits distal et proximal CD1, CP1 et des seconds conduits distal et proximal CD2, CP2. Dans l'exemple illustré, l'évidement 43 comporte, un plot d'équilibrage 44 (visible sur la figure 1) prévu au niveau de son extrémité ouverte et s'étendant radialement de sorte que son sommet soit en appui contre la chemise 3 tout en autorisant le passage du fluide sur ses cotés.

Le piston 4 comporte également, sur sa périphérie, une zone évidée 45 (visible sur la figure 1) fermée, angulairement opposée à l'évidement 43. La zone évidée 45 et l'évidement 43 sont délimitées par un joint d'étanchéité non détaillé, par exemple réalisé en élastomère et permettant d'éviter tout passage du fluide en dehors de l'évidement 43 et de la chambre de travail 5.

La portion cylindrique 40 de grand diamètre du piston 4 comporte deux nervures annulaires 46, parallèles l'une à l'autre de sorte à définir entre elles une double came de guidage du doigt de guidage. Ainsi, l'écartement longitudinal entre les nervures annulaires 46, en tout point de la rotation au droit du doigt de guidage, est ajusté aux dimensions du doigt de guidage pour autoriser ce guidage sans jeu ou sans jeu excessif. Le doigt de guidage peut également être muni d'une portion tournante destinée à rouler sur les nervures annulaires 46 et ainsi réduire le frottement. Le rendement énergétique est ainsi optimisé. Le doigt de guidage et les nervures annulaires 46 permettent de transformer la rotation du piston 4 par rapport au corps 2 en translation longitudinale le long de l'axe longitudinal A.

Les nervures annulaires 46 comportent chacune une première et une seconde portion inclinée SI1, SI2, symétriques l'une de l'autre par rapport à un plan longitudinal médian. Les première et seconde portions inclinées SI1, SI2 présentent ainsi des pentes inversée sur la périphérie du piston 4. La première et la seconde portion inclinée SI1, SI2 sont séparées l'une de l'autre par des première et seconde portions planes SP1, SP2 sensiblement parallèles entre elles et perpendiculaires à l'axe longitudinal A. Ainsi, par l'intermédiaire du doigt de guidage et des nervures annulaires 46, la rotation dans un premier sens de rotation R du piston 4 par rapport au corps 2, provoque successivement l'immobilité axiale du piston 4 par rapport au corps 2 le long de la première portion plane SP1 (Cf. figure 5), puis la translation proximale TP du piston 4 par rapport au corps 2 le long de la première portion inclinée SI1 (Cf. figures 6 et 7), puis l'immobilité axiale du piston 4 par rapport au corps 2 le long de la seconde portion plane SP2 (Cf. figure 8), puis enfin la translation distale TD du piston 4 par rapport au corps 2 le long de la seconde portion inclinée SI2 (Cf. figures 9 et 10), et ainsi de suite. Le piston 4 oscille ainsi entre une position proximale (Cf. figure 8) dans laquelle la chambre de travail 5 présente un volume maximal et une position distale (Cf. figure 5) dans laquelle la chambre de travail 5 présente un volume minimal. Entre ces deux positions du piston 4, la chambre de travail 5 admet puis refoule le fluide.

En référence aux figures 5 à 10, le fonctionnement du sous-ensemble oscillo-rotatif 1 selon l'invention est décrit ci-après, pour la troisième configuration fluidique (Cf. figures 4, 4A, 4B et 36) dans laquelle le second orifice distal OD2 est en regard du premier conduit distal CD1 et le troisième orifice distal OD3 est en regard du second conduit distal CD2.

Dans une première phase de commutation illustrée par la figure 5, le doigt de guidage circule le long de la première portion plane SP1 de la came. La rotation R du piston 4 ne provoque alors pas sa translation, il reste axialement immobile dans sa position distale, le volume de la chambre de travail 5 ne varie pas et reste minimal. Lors de cette première phase de commutation, le premier conduit distal CD1 et le second conduit distal CD2 sont en regard de la partie pleine du piston 4. Ainsi, même si le premier et le second orifice distal OD1, OD2 sont en regard respectivement du premier et du second conduit distal CD1, CD2, la chambre de travail 5 est fluidiquement fermée de manière étanche. La rotation R du piston 4 par rapport au corps 2 est prolongée jusqu'à atteindre la phase d'admission.

En phase d'admission illustrée par les figures 6 et 7, le doigt de guidage circule principalement le long de la première portion inclinée SI1 de la came qui transforme la rotation R du piston 4 en une translation proximale TP du piston 4 par rapport au corps 2. Le piston 4 passe de la position distale (figure 5) à une position proximale (figure 8) dans laquelle la chambre de travail 5 présente un volume maximal. Pendant la phase d'admission, le piston 4 tourne par rapport au corps 2 avec l'évidement 43 circulant devant le premier conduit distal CD1 et le premier conduit proximal CP1. Ainsi le premier conduit distal CD1 est en communication fluidique avec la chambre de travail 5 par l'intermédiaire du second orifice distal OD2 et de l'évidement 43. Le fluide est aspiré selon la flèche E, par l'augmentation du volume de la chambre de travail 5 provoquée par la translation proximale TP et la dépression générée dans la chambre de travail 5. Le premier conduit proximal CP1 et le second conduit proximal CP2 restent obturés par la chemise 3. Pendant cette phase d'admission, l'étanchéité de la zone évidée 45 est assurée par le joint d'étanchéité, le second conduit distal CD2 n'est pas en communication fluidique avec la chambre de travail 5, ce qui est schématisé par une croix. La rotation R du piston 4 par rapport au corps 2 est prolongée jusqu'à atteindre une seconde phase de commutation. De manière avantageuse, en début de phase d'admission, pendant une phase de transition, le doigt de guidage circule sur la fin de la seconde portion plane SP2. De même, en fin de phase d'admission, pendant une phase de transition, le doigt de guidage circule sur le début de la première portion plane SP1 de la came. Ainsi les phases de transition, se passent à volume constant de la chambre de travail 5.

La seconde phase de commutation illustrée par la figure 8 est sensiblement similaire à la première phase de commutation. Elle s'en différencie par le piston 4 en position proximale et la chambre de travail 5 qui présente un volume maximal. Pendant cette seconde phase de commutation le doigt de guidage circule le long de la seconde portion plane SP2 de la came. La rotation R du piston 4 ne provoque alors pas sa translation, il reste axialement immobile dans sa position distale, le volume de la chambre de travail 5 ne varie pas et reste maximal. Lors de cette seconde phase de commutation, le premier conduit distal CD1 et le second conduit distal CD2 sont en regard de la partie pleine du piston 4. Ainsi, même si le premier et le second orifice distal OD1, OD2 sont en regard respectivement du premier et du second conduit distal CD1, CD2, la chambre de travail 5 est fluidiquement fermée de manière étanche. La rotation R du piston 4 par rapport au corps 2 est prolongée jusqu'à atteindre la phase de refoulement.

Dans cette phase de refoulement illustrée par les figures 9 et 10, le doigt de guidage circule principalement le long de la seconde portion inclinée SI2 de la came qui transforme la rotation R du piston 4 en une translation distale TD, opposée à la translation proximale TP. Ainsi, le piston 4 passe de sa position proximale (figure 8) à sa position distale (figure 5). Pendant la phase de refoulement, le piston 4 tourne par rapport au corps 2 avec l'évidement 43 circulant devant le second conduit distal CD2 et le second conduit proximal CP2. Ainsi le second conduit distal CD2 est en communication fluidique avec la chambre de travail 5 par l'intermédiaire du second orifice distal OD2 et de l'évidement 43. Le fluide est refoulé selon la flèche S, par la réduction du volume de la chambre de travail 5 provoquée par la translation distale TD et créant une surpression dans la chambre de travail 5. Pendant cette phase de refoulement, l'étanchéité de la zone évidée 45 est assurée par le joint d'étanchéité, le premier conduit distal CD1 n'est pas en communication fluidique avec la chambre de travail 5. La rotation R du piston 4 par rapport au corps 2 est prolongée jusqu'à atteindre la première phase de commutation précédemment décrite. De manière avantageuse, en début de refoulement, pendant une phase de transition, le doigt de guidage circule sur la fin de la première portion plane SP1. De même, en fin de phase de refoulement, pendant une phase de transition, le doigt de guidage circule sur le début de la seconde portion plane SP2 de la came. Ainsi les phases de transition se passent à volume constant de la chambre de travail 5.

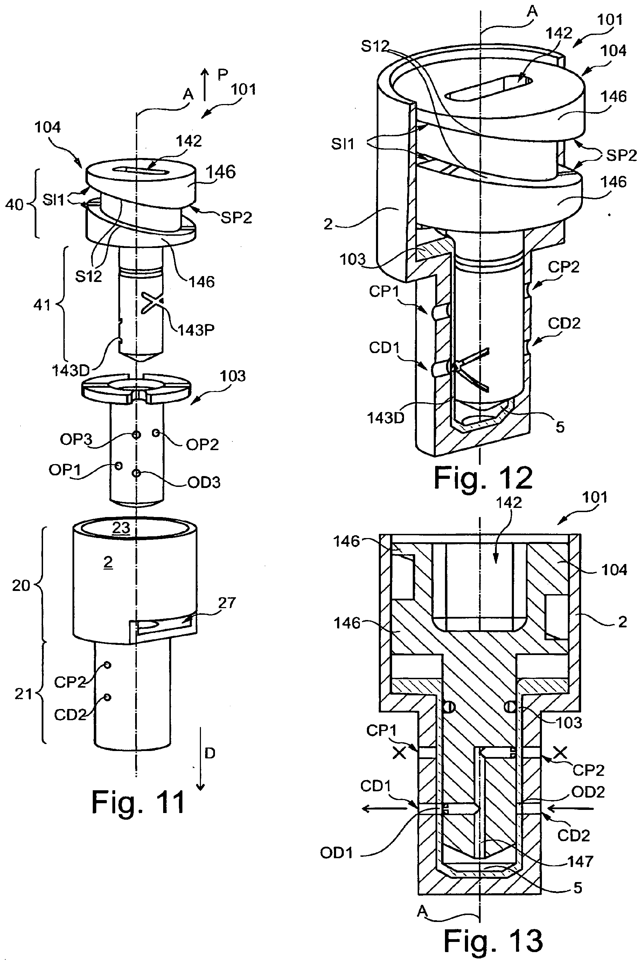

En référence aux figures 11 à 21, le dispositif oscillo-rotatif 101 selon l'invention comprend un corps 2 selon le premier arrangement, une chemise 103 selon un second agencement, et un piston 104 selon un second mode de réalisation.

Le piston 104 selon le second mode de réalisation est sensiblement similaire au piston 4 selon le premier mode de réalisation et s'en différencie principalement en ce qu'il comporte un évidement distal 143D et un évidement proximal 143P en forme de croix prévus sur la périphérie de la portion cylindrique 41 de petit diamètre. Les évidements distal 143D et proximal 143P peuvent présenter toute autre forme adaptée. Ces évidements distal 143D et proximal 143P sont décalés angulairement l'un de l'autre, ici de 180°, et longitudinalement d'une distance dépendant notamment du profil des nervures annulaires 146 et prévue de sorte que, à chaque demi-tour du piston 104 dans le corps 2, l'évidement proximal 143P soit en regard de l'un des premier et second conduits proximaux CP1, CP2, et l'évidement distal 143D soit en regard de l'un des premier et second conduits distaux CD1, CD2. Le piston 104 comporte par ailleurs un canal 147 visible sur la figure 13 pourvu d'un tronçon longitudinal débouchant longitudinalement dans la chambre de travail 5, d'un tronçon radial distal débouchant dans l'évidement distal 143D et un tronçon radial proximal débouchant dans l'évidement proximal 143P. Par ailleurs, l'évidement axial 142 prévu à l'extrémité libre de la portion cylindrique 140 de grand diamètre présente une forme de fente rectiligne.

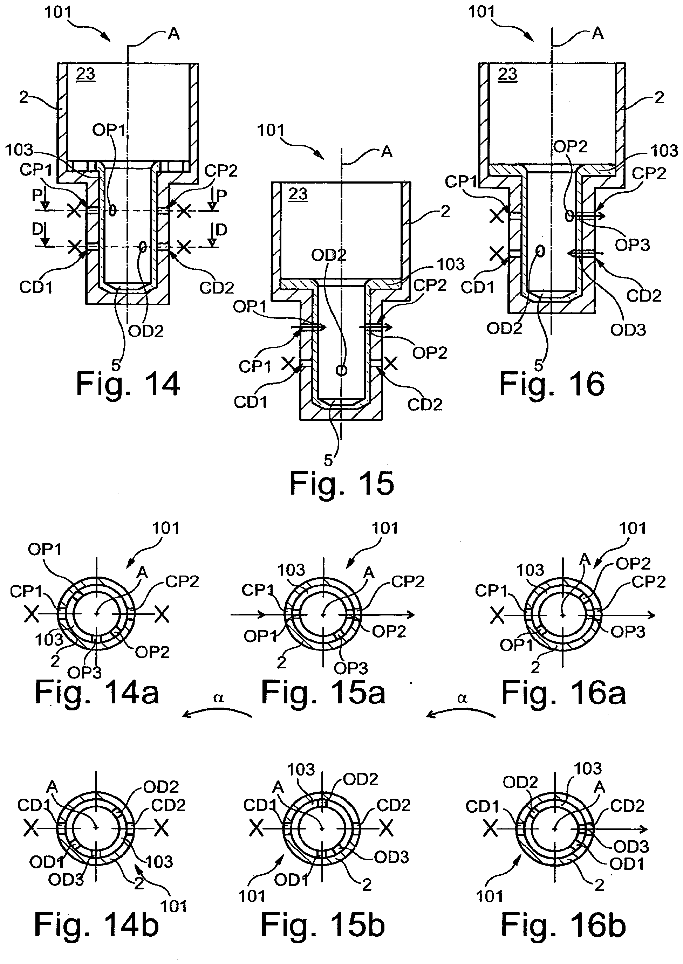

En référence en particulier aux figures 14A, 14B, 15A, 15B, 16A, 16B et17A, 17B, la chemise 103 selon le second agencement est sensiblement similaire à la chemise 3 selon le premier agencement. Elle s'en différencie par le nombre et l'emplacement d'orifices. La chemise 103 comporte des premier, second et troisième orifices proximaux OP1, OP2, OP3 angulairement répartis dans le plan radial proximal PP et des premier, second et troisième orifices distaux OD1, OD2, OD3 angulairement répartis dans le plan radial distal DD. Comme visible sur les figures 14A à 17A, le second orifice proximal OP2 est décalé de 180° dans le sens horaire par rapport au premier orifice proximal OP1. Le troisième orifice proximal OP3 est décalé de 45° dans le sens horaire par rapport au second orifice proximal OP2. Comme visible sur les figures 14B à 17B, le second orifice distal OD2 est décalé de 180° dans le sens horaire par rapport au premier orifice distal OD1. Le troisième orifice distal OD3 est décalé de 135° dans le sens horaire par rapport au second orifice distal OD2. Par ailleurs, le premier orifice distal OD1 est décalé de 90° dans le sens antihoraire par rapport au premier orifice proximal OP1.

Le corps 2 selon le premier arrangement et la chemise 103 selon le second agencement permettent plusieurs configurations fluidiques dont certaines sont illustrées et détaillées ci-après.

En référence aux figures 14, 14A et 14B, la chemise 103 est dans la quatrième configuration fluidique (Cf. figure 37) dans laquelle les premiers et seconds conduits distaux CD1, CD2 et proximaux CP1, CP2 sont obturés par la chemise 103.

En référence aux figures 15,15A et 15B, la chemise 103 est dans la seconde configuration fluidique (Cf. figure 35) dans laquelle le premier et le second orifice proximal OP1, OP2 sont en regard respectivement du premier et du second conduit proximal CP1, CP2, le premier et le second conduit distal CD1, CD2 sont obturés par la chemise 103. Pour passer de la quatrième à la seconde configuration fluidique, la chemise 103 a été tournée d'un angle α de 45° par rapport au corps 2 dans le sens antihoraire dans un sens d'observation distal.

En référence aux figures 16, 16A et 16B, la chemise 103 est dans la cinquième configuration fluidique (Cf. figure 38) dans laquelle le troisième orifice proximal OP3 est en regard du second conduit proximal CP2, le troisième orifice distal OD3 est en regard du second conduit distal CD2, le premier conduit proximal CP1 et le premier conduit distal CD1 sont obturés par la chemise 103. Pour passer de la seconde à la cinquième configuration fluidique, la chemise 103 a été tournée d'un angle α de 45° par rapport au corps dans le sens antihoraire dans un sens d'observation distal.

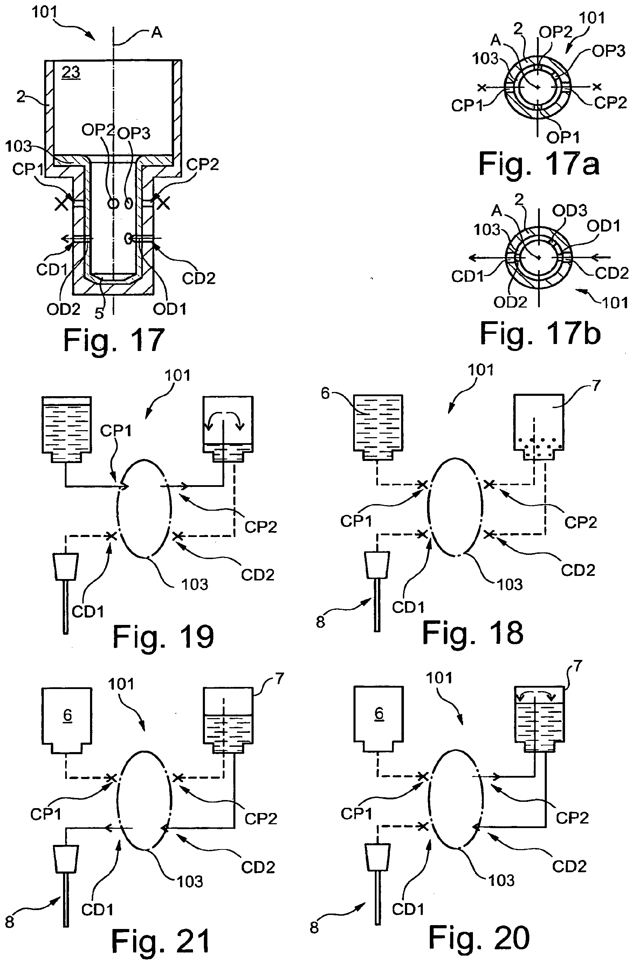

En référence aux figures 17, 17A et 17B ainsi qu'aux figures 12 et 13, la chemise 103 est dans la troisième configuration fluidique (Cf. figure 36) dans laquelle les premier et second orifices distaux OD1, OD2 sont en regard respectivement des second et premier conduits distaux CD2, CD1, les premier et le second conduits proximaux CP1, CP2 sont obturés par la chemise 103. Pour passer de la cinquième à la troisième configuration fluidique, la chemise 103 a été tournée d'un angle α de 45° par rapport au corps 2 dans le sens antihoraire dans un sens d'observation distal. Au-delà de cette troisième configuration fluidique, la chemise 103 peut être tournée pour adopter d'autres configurations fluidiques non détaillées.

En référence aux figures 18 à 21, un tel dispositif oscillo-rotatif 101 peut par exemple être utilisé pour reconstituer un mélange à base par exemple d'une solution liquide et d'un lyophilisat contenus séparément dans deux flacons 6, 7 distincts, puis d'administrer le mélange obtenu à un patient ou de le conserver dans l'un des flacons ou un autre récipient. A cet effet, en référence à la figure 18, le premier conduit proximal CP1 est raccordé à un premier flacon 6 contenant une solution liquide, les seconds conduits proximal et distal CP2, CD2 sont raccordés à un second flacon 7 contenant un lyophilisat et le premier conduit distal CD1 est raccordé à un dispositif d'administration 8, par exemple par injection. Ces raccordements peuvent être réalisés par tout moyen adapté, par exemple des tuyaux. Dans les figures 18 à 21, les tuyaux sont représentés en trait continu lorsque du fluide circule à l'intérieur et en pointillé en absence de circulation fluidique dans le tuyau.

Avant transfert fluidique, la chemise 103 (schématisée en trait mixte fin) est conservée dans la quatrième configuration fluidique (Cf. figures 14, 14A, 14B et 37). Ainsi, malgré le raccordement fluidique des premier et second flacons 6, 7, la solution liquide dans le premier flacon 6 reste, à ce stade, fluidiquement séparée du lyophilisat conservé dans le second flacon 7.

Dans un premier temps, en référence à la figure 19, la chemise 103 est disposée dans la seconde configuration fluidique (Cf. figures 15, 15A, 15B et 35). On actionne le piston 104 de sorte à aspirer la solution liquide dans la chambre de travail 5 par le premier conduit proximal CP1 et à le refouler de la chambre de travail 5 par le second conduit proximal CP2 vers le second flacon 7. La solution liquide est ainsi transférée du premier flacon 6 la contenant initialement au second flacon 7 contenant le lyophilisat. A ce stade, on peut homogénéiser le mélange de solution liquide et de lyophilisat par aller-retour du mélange entre le premier et le second flacon 6, 7 en inversant le sens de rotation du piston 104.

Dans un second temps, en référence à la figure 20, la chemise 103 est disposée dans la cinquième configuration fluidique (Cf. figures 16, 16A et 16B et 38). On actionne le piston 104 de sorte à aspirer la solution liquide et le lyophilisat du second flacon 7 dans la chambre de travail 5 par le second conduit distal CD2 et à le refouler de la chambre de travail 5 vers le second flacon 7 par le second conduit proximal CP2. La circulation et le brassage de la solution liquide et du lyophilisat permet d'obtenir un mélange homogène dans le second flacon 7.

Dans un troisième temps, en référence à la figure 21, la chemise 103 est disposée dans la troisième configuration fluidique (Cf. figures 17, 17A et 17B et 36). On actionne le piston 104 de sorte à aspirer le mélange contenu dans le second flacon 7dans la chambre de travail 5 par le second conduit distal CD2 et à le refouler de la chambre de travail 5 par le premier conduit distal CD1 vers le dispositif d'administration 8.

Selon un autre mode d'utilisation non représenté, une partie du mélange peut être conservée dans le premier flacon 6, une autre partie du mélange étant contenue dans le second flacon 7 pour être transférée vers le dispositif d'administration 8. La partie du mélange conservée dans le premier flacon 6 peut ensuite être transférée vers le second flacon 7 puis vers le dispositif d'administration 8. L'administration peut ainsi être séquencée dans le temps. En adaptant la proportion de mélange dans les premier et second flacons 6, 7, le séquençage peut être décomposé en un nombre de séquences supérieur, le volume administré à chaque séquence étant adapté selon les besoins.

En fonction des raccordements fluidiques et des configurations fluidiques utilisées pour la chemise 103, le dispositif oscillo-rotatif 101 des figures 11 à 17B peut être utilisé pour toute autre application.

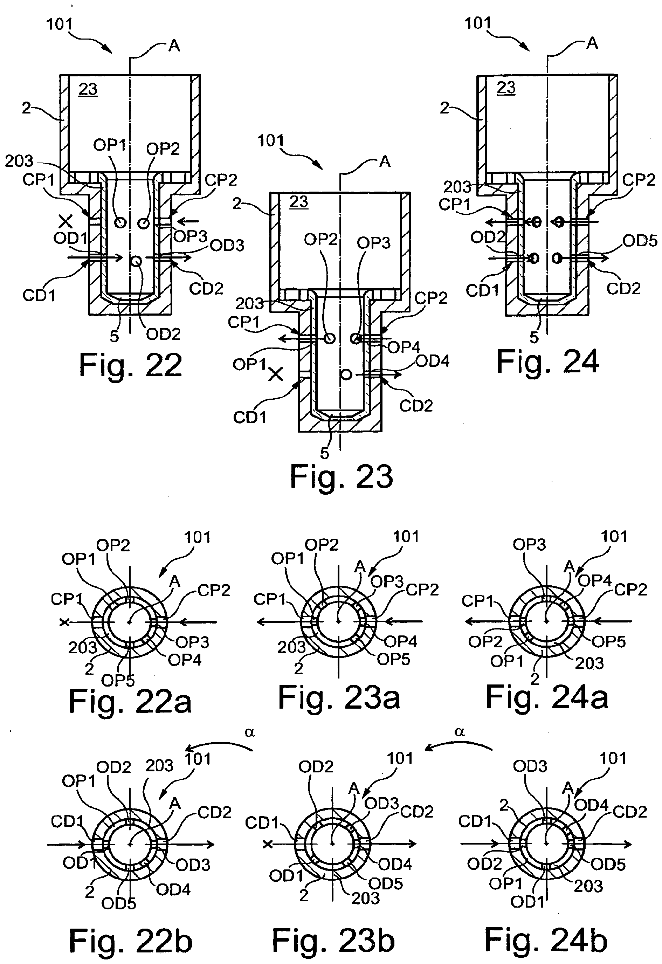

On comprend aisément que le changement de chemise permet d'exploiter d'autres configurations fluidiques. C'est le cas notamment de la chemise 203 selon un troisième agencement illustré par les figures 22 à 24B et utilisée avec un corps 2 selon le premier arrangement et un piston 104 selon le second mode de réalisation.

La chemise 203 selon ce troisième agencement est sensiblement similaire aux chemises 3 et 103 des premier et second agencements. Elle s'en différencie par le nombre et l'emplacement d'orifices. La chemise 203 comporte des premier, second, troisième, quatrième et cinquième orifices proximaux OP1, OP2, OP3, OP4, OP5, angulairement répartis dans le plan radial proximal PP et des premier, second, troisième, quatrième et cinquième orifices distaux OD1, OD2, OD3, OD4, OD5 angulairement répartis dans le plan radial distal DD. Comme visible sur les figures 22A à 24A, le second orifice proximal OD2 est décalé de 45° dans le sens horaire par rapport au premier orifice proximal OD1. Le troisième orifice proximal OP3 est décalé de 90° dans le sens horaire par rapport au second orifice proximal OP2. Le quatrième orifice proximal OP4 est décalé de 45° dans le sens horaire par rapport au troisième orifice proximal OP3. Le cinquième orifice proximal OP5 est décalé de 45° dans le sens horaire par rapport au quatrième orifice proximal OP4. Comme visible sur les figures 22B à 24B, le second orifice distal OD2 est décalé de 90° dans le sens horaire par rapport au premier orifice distal OD1. Le troisième orifice distal OD3 est décalé de 90° dans le sens horaire par rapport au second orifice distal OD2. Le quatrième orifice distal OD4 est décalé de 45° dans le sens horaire par rapport au troisième orifice distal OD3. Le cinquième orifice distal OD5 est décalé de 45° dans le sens horaire par rapport au quatrième orifice distal OD4. Par ailleurs, le premier orifice distal OD1 est décalé de 45° dans le sens antihoraire par rapport au premier orifice proximal OP1.

En référence aux figures 22, 22A et 22B, la chemise 203 est dans la sixième configuration fluidique (Cf. figure 39) dans laquelle les premier, second, quatrième et cinquième orifices proximaux OP1, OP2, OP4, OP5 ainsi que les second, quatrième et cinquième orifices distaux OD2, OD4, OD5 sont obturés par la chemise 203, le troisième orifice proximal OP3 est en regard du second conduit proximal CP2, le premier et le troisième orifice distal OD1, OD3 sont en regard respectivement des premier et du second conduits distaux CD1, CD2.

En référence aux figures 23, 23A et 23B, la chemise 203 est dans la septième configuration fluidique (Cf. figure 40) dans laquelle le premier et le quatrième orifice proximal OP1, OP4 sont en regard respectivement des premier et du second conduits proximaux CP1, CP2, les premier, second, troisième et cinquième orifices distaux OD1, OD2, OD3, OD5 sont obturés par la chemise 203 et le quatrième orifice distal OD4 est en regard du second conduit distal CD2. Pour passer de la sixième à la septième configuration fluidique, la chemise 203 a été tournée d'un angle α de 45° par rapport au corps 2 dans le sens antihoraire dans un sens d'observation distal.

En référence aux figures 24, 24A et 24B, la chemise 203 est dans la huitième configuration fluidique (Cf. figure 41) dans laquelle le premier et le cinquième orifice proximal OP1, OP5 sont en regard respectivement des premier et du second conduits proximaux CP1, CP2, le second et le cinquième orifice distal OD2, OD5 sont en regard respectivement des premier et du second conduits distaux CD1, CD2. Pour passer de la septième à la huitième configuration fluidique, la chemise 203 a été tournée d'un angle α de 45° par rapport au corps 2 dans le sens antihoraire dans un sens d'observation distal.

Selon une variante de réalisation non représentée, les angles séparant les orifices de la chemise sont différents et permettent des configurations fluidiques supplémentaires. Ainsi, les orifices sont choisis, en nombre et emplacement, en fonction des configurations fluidiques souhaitées.

Selon un autre mode de réalisation non représenté, les conduits prévus dans le corps ne sont pas diamétralement opposés entre eux, mais disposés selon un angle par exemple choisi en fonction de la configuration de raccordement fluidique souhaitée. Les orifices de la chemise et évidements du piston sont agencés en conséquence.

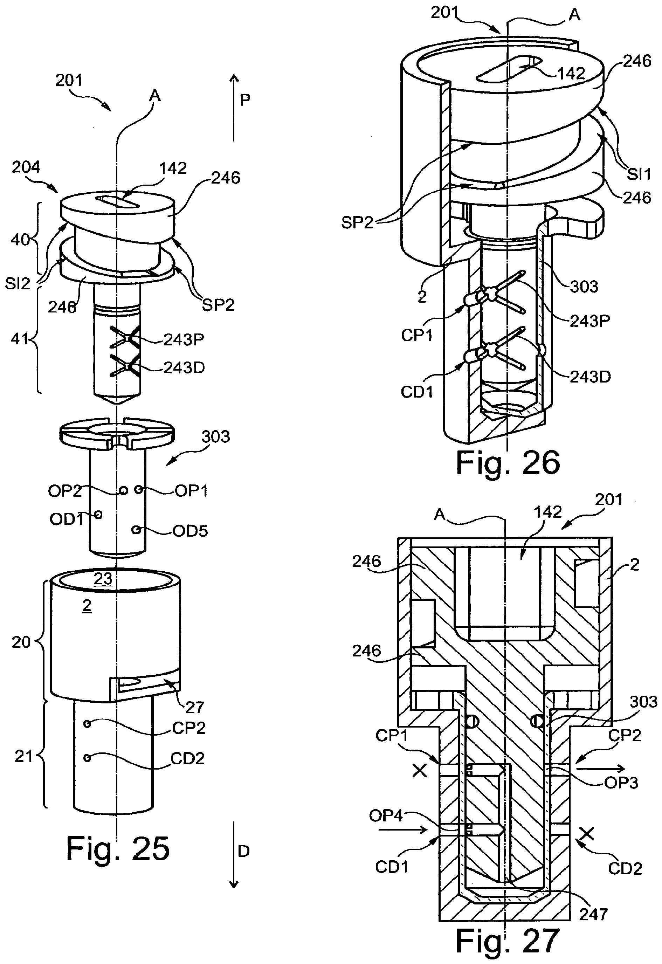

En référence aux figures 25 à 31, le dispositif oscillo-rotatif 201 selon l'invention comprend un corps 2 selon le premier arrangement, une chemise 303 selon un quatrième agencement, et un piston 204 selon un troisième mode de réalisation.

Le piston 204 selon le troisième mode de réalisation est sensiblement similaire au piston 104 selon le second mode de réalisation. Il s'en différencie principalement en ce que l'évidement distal 143D et l'évidement proximal 143P sont alignés entre eux longitudinalement. Comme précédemment indiqué, les conduits dans le corps peuvent ne pas être diamétralement opposés entre eux, mais disposés selon tout autre angle adapté, les orifices de la chemise et évidements du piston étant agencés en conséquence.

Comme pour le second mode de réalisation, le piston 204 comporte un canal 247 formé d'un tronçon longitudinal, d'un tronçon radial distal et d'un tronçon radial proximal.

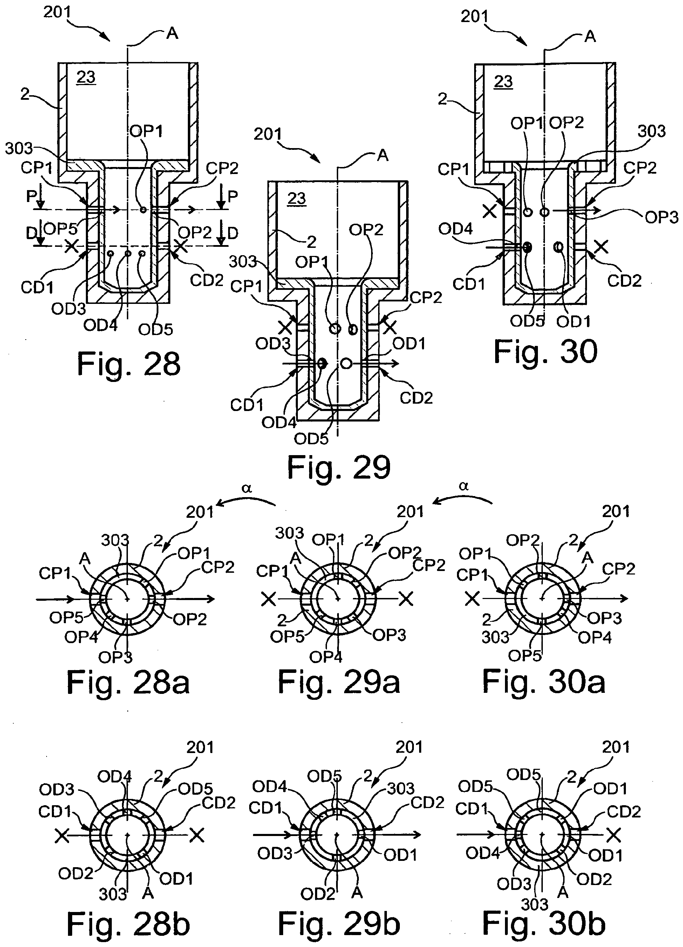

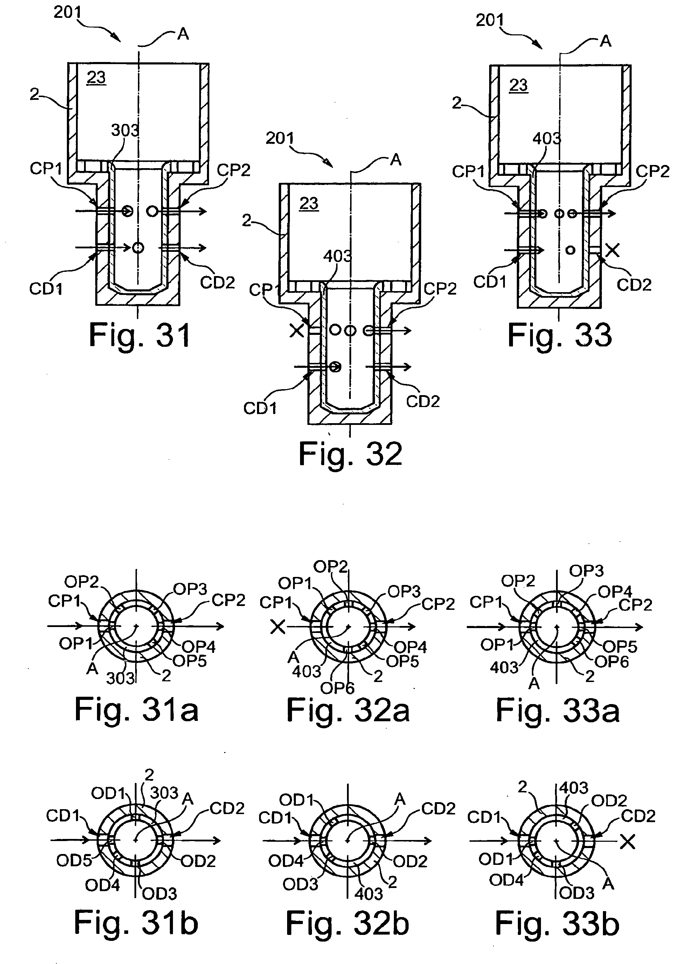

En référence en particulier aux figures 28A, 28B à 33A, 33B, la chemise 303 selon le quatrième agencement se différencie des précédentes par le nombre et l'emplacement des orifices. Elle comporte des premier, second, troisième, quatrième et cinquième orifices proximaux OP1, OP2, OP3, OP4, OP5 disposés entre eux de manière similaire à ceux de la chemise 203 du troisième agencement et des premier, second, troisième, quatrième et cinquième orifices distaux OD1, OD2, OD3, OD4, OD5 disposés entre eux de manière similaire à ceux de la chemise 203 du troisième agencement avec toutefois, le premier orifice distal OD1 décalé de 90° dans le sens horaire par rapport au premier orifice proximal OP1. Cette chemise 303 permet d'adopter successivement, par rotations successives d'un angle α de 45°, les configurations fluidiques suivantes :
- en référence aux figures 28, 28A et 28B, la seconde configuration fluidique (Cf. figure 35),
- en référence aux figures 29, 29A et 29B, la troisième configuration fluidique (Cf. figure 36),
- en référence aux figures 30, 30A et 30B, la première configuration fluidique (Cf. figure 34) ; ou la première configuration fluidique symétrique non représentée,
- en référence aux figures 31, 31 A et 31 B, la huitième configuration fluidique (Cf. figure 41).

La même chemise 303 permet ainsi d'adopter quatre configurations fluidiques distinctes sans compter la première configuration fluidique symétrique.

En référence aux figures 32 à 33B, le dispositif oscillo-rotatif 201 comprend une chemise 403 selon un cinquième agencement.

La chemise 403 selon ce cinquième agencement se différencie des précédentes par le nombre et l'emplacement des orifices. Elle comporte des premier, second, troisième, quatrième, cinquième et sixième orifices proximaux OP1, OP2, OP3, OP4, OP5, OP6 angulairement répartis dans le plan radial proximal PP et des premier, second, troisième et quatrième orifices distaux OD1, OD2, OD3, OD4 angulairement répartis dans le plan radial distal DD. Comme visible sur les figures 32A et 33A, les premier, second, troisième, quatrième, cinquième et sixième orifices proximaux OP1, OP2, OP3, OP4, OP5, OP6 sont décalés deux à deux entre eux de 45° dans le sens horaire.

Comme visible sur les figures 32B et 33B, le second orifice distal OD2 est décalé de 135° dans le sens horaire par rapport au premier orifice distal OD1. Le troisième orifice distal OD3 est décalé de 135° dans le sens horaire par rapport au second orifice distal OD2. Le quatrième orifice distal OD4 est décalé de 45° dans le sens horaire par rapport au troisième orifice distal OD3. Par ailleurs, le premier orifice distal OD1 est longitudinalement aligné avec le premier orifice proximal OP1.

Cette chemise 403 permet d'adopter successivement, par rotation successives d'un angle α de 45°, les configurations fluidiques suivantes :
- en référence aux figures 32, 32A et 32B, la sixième configuration fluidique (Cf. figure 39),
- en référence aux figures 33, 33A et 33B, la septième configuration fluidique symétrique (Cf. figure 39).

La même chemise 403 permet également d'adopter la première configuration fluidique (Cf. figure 34, 30, 30A et 30B) et la seconde configuration fluidique (Cf. figure 36, 29, 29A et 29B).

Avec les exemples précédents, on comprend bien ainsi que les orifices sont prévus dans la chemise en fonction des combinaisons de configurations fluidiques souhaitées pour chaque application spécifique du dispositif oscillo-rotatif 1, 101, 201 selon l'invention.

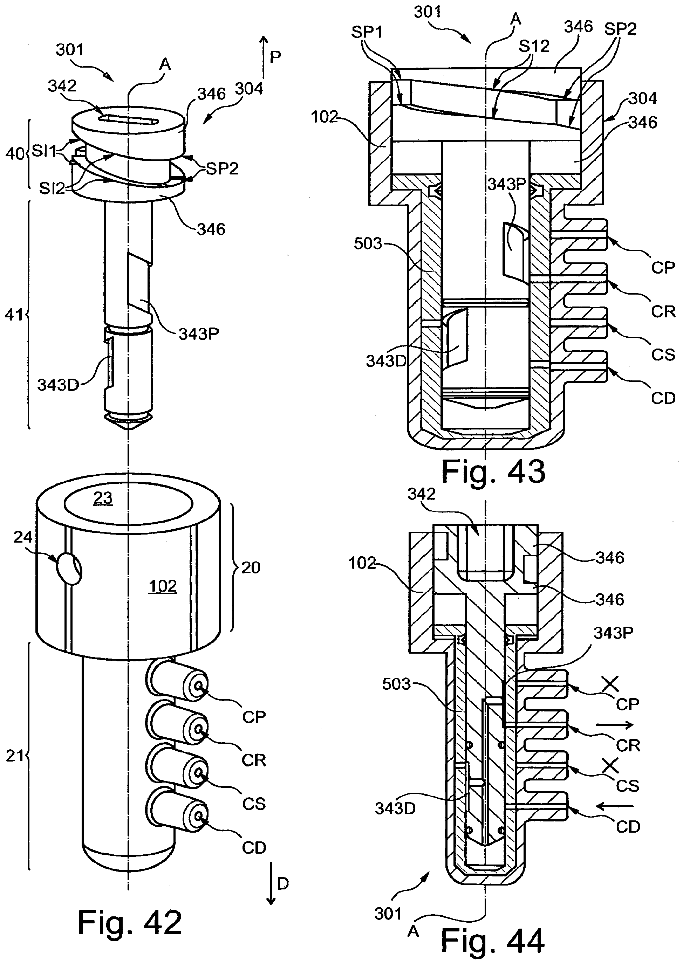

En référence aux figures 42 à 46D, le dispositif oscillo-rotatif 301 l'invention comprend un corps 102 selon un second arrangement, une chemise 503 selon un cinquième agencement, et un piston 304 selon un quatrième mode de réalisation.

Le corps 102 selon le second arrangement se différencie des précédents en ce que les quatre conduits CP, CR, CS, CD sont superposés les uns aux autres, alignés longitudinalement entre eux de sorte que tous les raccordements fluidiques du dispositif oscillo-rotatif 301 s'opèrent d'un même coté. Le corps 102 comporte ainsi un conduit proximal CP situé dans un plan proximal PP, un conduit distal CD situé dans un plan distal DD ainsi qu'un conduit proximal intermédiaire CR situé dans un plan proximal intermédiaire RR et un conduit distal intermédiaire CS situé dans un plan distal intermédiaire SS.

En référence aux figures 42 à 44, le piston 304 selon le quatrième mode de réalisation est sensiblement similaire à celui du second mode de réalisation. Il s'en différencie en ce que chaque évidement proximal 143P et distal 143D présente la forme d'une fente inclinée suffisamment étendue longitudinalement pour couvrir simultanément le conduit proximal CP et le conduit proximal intermédiaire CR, ou le conduit distal CD et le conduit distal intermédiaire CS.

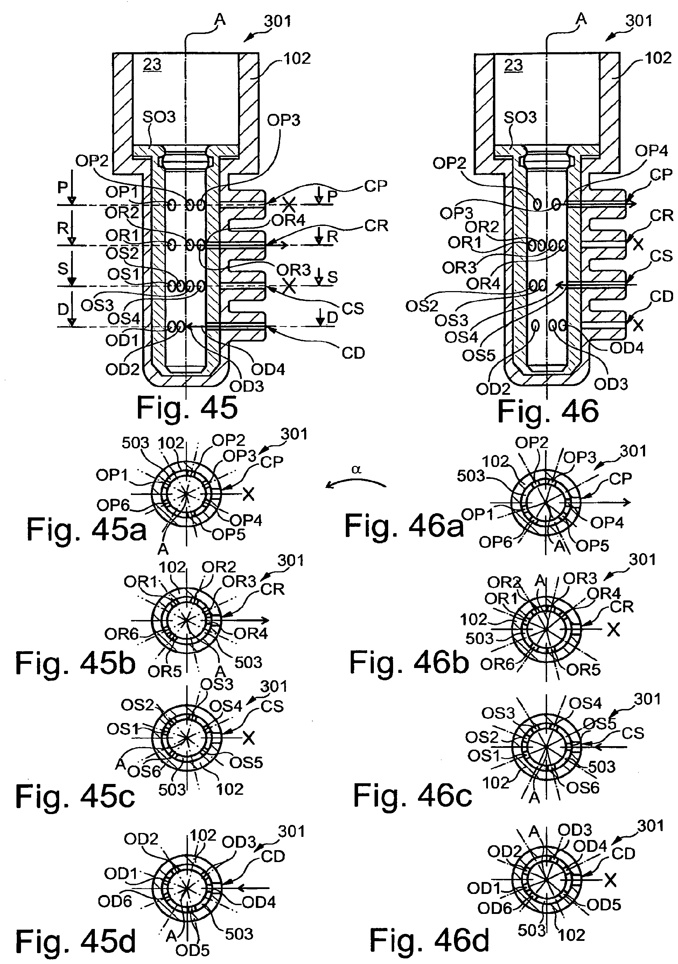

La chemise 503 selon le cinquième agencement est illustrée par les figures 45 à 54. Elle comporte six orifices proximaux OP1, OP2, OP3, OP4, OP5, OP6 répartis dans le plan proximal PP, six orifices distaux OD1, OD2, OD3, OD4, OD5, OD6 répartis dans le plan distal DD ainsi que six orifices proximaux intermédiaires OR1, OR2, OR3, OR4, OR5, OR6 répartis dans le plan proximal intermédiaire RR et six orifices distaux intermédiaires OS1, OS2, OS3, OS4, OS5, OS6 répartis dans le plan distal intermédiaire SS. Par ailleurs, les orifices proximaux, distaux, proximaux intermédiaires et distaux intermédiaires sont arrangés entre eux dans des plans longitudinaux décalés les uns des autres de 40°

Comme visible sur les figures 45A à 53A, le second orifice proximal OP2 est décalé de 80° dans le sens horaire par rapport au premier orifice proximal OP1. Le troisième orifice proximal OP3 est décalé de 40° dans le sens horaire par rapport au second orifice proximal OP2. Le quatrième orifice proximal OP4 est décalé de 80° dans le sens horaire par rapport au troisième orifice proximal OP3. Le cinquième orifice proximal OP5 est décalé de 40° dans le sens horaire par rapport au quatrième orifice proximal OP4. Le sixième orifice proximal OP6 est décalé de 80° dans le sens horaire par rapport au cinquième orifice proximal OP5.

Comme visible sur les figures 45B à 53B, le second orifice proximal intermédiaire OR2 est décalé de 40° dans le sens horaire par rapport au premier orifice proximal intermédiaire OR1. Le troisième orifice proximal intermédiaire OR3 est décalé de 40° dans le sens horaire par rapport au second orifice proximal intermédiaire OR2. Le quatrième orifice proximal intermédiaire OR4 est décalé de 40° dans le sens horaire par rapport au troisième orifice proximal intermédiaire OR3. Le cinquième orifice proximal intermédiaire OR5 est décalé de 120° dans le sens horaire par rapport au quatrième orifice proximal intermédiaire OR4. Le sixième orifice proximal intermédiaire OR6 est décalé de 40° dans le sens horaire par rapport au cinquième orifice proximal intermédiaire OR5. Par ailleurs, le premier orifice proximal intermédiaire OR1 est décalé de 40° dans le sens horaire par rapport au premier orifice proximal OP1.

Comme visible sur les figures 45C à 53C, le second orifice distal intermédiaire OS2 est décalé de 40° dans le sens horaire par rapport au premier orifice distal intermédiaire OS1. Le troisième orifice distal intermédiaire OS3 est décalé de 40° dans le sens horaire par rapport au second orifice distal intermédiaire OS2. Le quatrième orifice distal intermédiaire OS4 est décalé de 40° dans le sens horaire par rapport au troisième orifice distal intermédiaire OS3. Le cinquième orifice distal intermédiaire OS5 est décalé de 80° dans le sens horaire par rapport au quatrième orifice distal intermédiaire OS4. Le sixième orifice distal intermédiaire OS6 est décalé de 80° dans le sens horaire par rapport au cinquième orifice distal intermédiaire OS5. Par ailleurs, le premier orifice distal intermédiaire OS1 est décalé de 40° dans le sens antihoraire par rapport au premier orifice proximal intermédiaire OR1.

Comme visible sur les figures 45D à 53D, second orifice distal OD2 est décalé de 40° dans le sens horaire par rapport au premier orifice distal OD1. Le troisième orifice distal OD3 est décalé de 80° dans le sens horaire par rapport au second orifice distal OD2. Le quatrième orifice distal OD4 est décalé de 40° dans le sens horaire par rapport au troisième orifice distal OD3. Le cinquième orifice distal OD5 est décalé de 80° dans le sens horaire par rapport au quatrième orifice distal OD4. Le sixième orifice distal OD6 est décalé de 80° dans le sens horaire par rapport au cinquième orifice distal OD5. Par ailleurs, le premier orifice distal OD1 est aligné longitudinalement au premier orifice distal intermédiaire OS1.

En référence aux figures 45, 45A, 45B, 45C et 45D, la chemise 503 est dans une neuvième configuration fluidique dans laquelle le conduit proximal CP est obturé par la chemise 503, le quatrième orifice proximal intermédiaire OR4 est en regard du conduit proximal intermédiaire CR qui est passant, le conduit distal intermédiaire CS est obturé par la chemise 503, le quatrième orifice distal OD4 est en regard du conduit distal CD qui est passant. Ainsi, dans cette neuvième configuration fluidique, le fluide peut être admis par le conduit distal CD et refoulé par le conduit proximal CP intermédiaire, ou inversement.

En référence aux figures 46, 46A, 46B, 46C et 46D, la chemise 503 est dans une dixième configuration fluidique dans laquelle le quatrième orifice proximal OP4 est en regard du conduit proximal CP qui est passant, le conduit proximal intermédiaire CR est obturé par la chemise 503, le cinquième orifice distal intermédiaire OS5 est en regard du conduit distal intermédiaire CS qui est passant, le quatrième orifice distal OD4 est obturé par la chemise 503. Ainsi, dans cette dixième configuration fluidique, le fluide peut être admis par le conduit distal intermédiaire CS et refoulé par le conduit proximal CP, ou inversement.

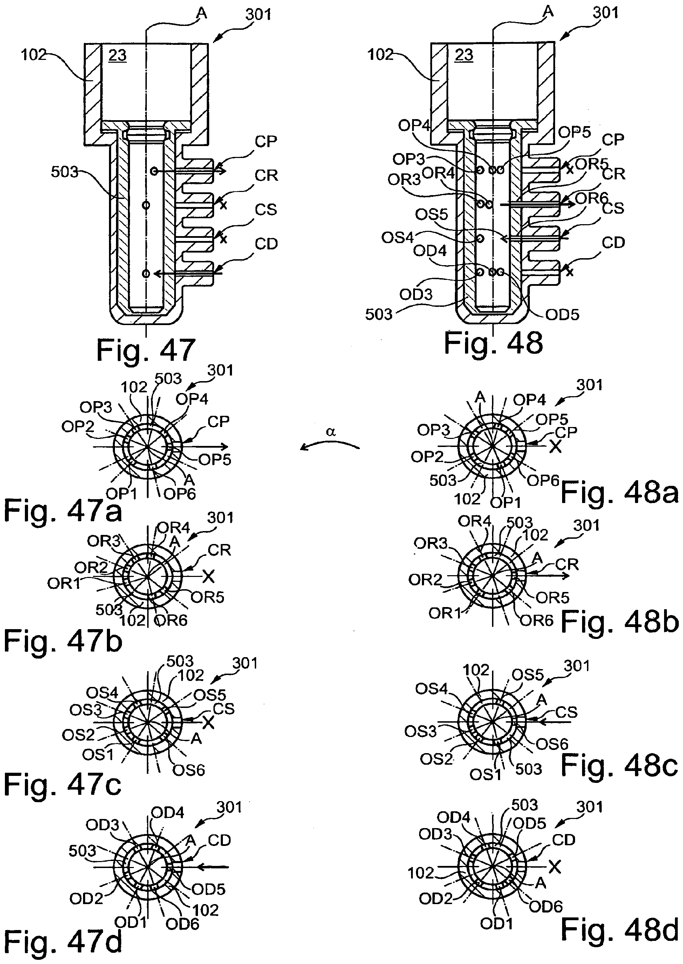

En référence aux figures 47, 47A, 47B, 47C et 47D, la chemise 503 est dans une onzième configuration fluidique dans laquelle le cinquième orifice proximal OP5 est en regard du conduit proximal CP qui est passant, le conduit proximal intermédiaire CR est obturé par la chemise 503, le conduit distal I intermédiaire CS est obturé par la chemise 503, le cinquième orifice distal OD5 est en regard du quatrième conduit distal CD4 qui est passant. Ainsi, dans cette onzième configuration fluidique, le fluide peut être admis par le conduit distal CD et refoulé par le conduit proximal CP, ou inversement.

En référence aux figures 48, 48A, 48B, 48C et 48D, la chemise 503 est dans une douzième configuration fluidique dans laquelle le conduit proximal CP est obturé par la chemise 503, le cinquième orifice proximal intermédiaire OR5 est en regard du conduit proximal intermédiaire CR qui est passant, le sixième orifice distal intermédiaire OS6 est en regard du conduit distal intermédiaire CS qui est passant, le conduit distal CD est obturé par la chemise 503. Ainsi, dans cette douzième configuration fluidique, le fluide peut être admis par le conduit distal intermédiaire CS et refoulé par le conduit proximal intermédiaire CR, ou inversement.

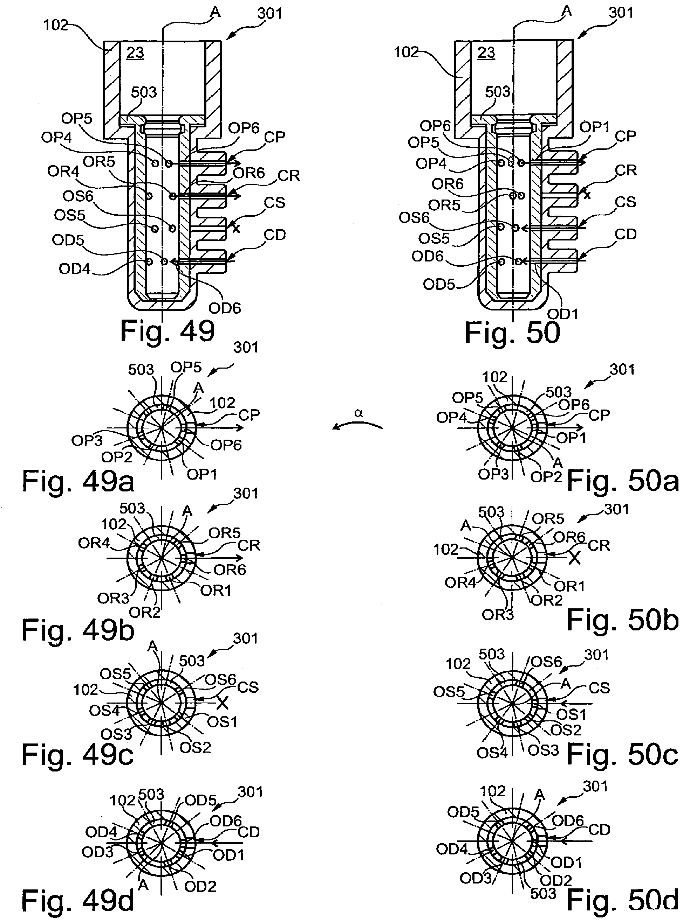

En référence aux figures 49, 49A, 49B, 49C et 49D, la chemise 503 est dans une treizième configuration fluidique dans laquelle le sixième orifice proximal OP6 est en regard du conduit proximal CP qui est passant, le sixième orifice proximal intermédiaire OR6 est en regard du conduit proximal intermédiaire CR qui est passant, le conduit distal intermédiaire CS est obturé par la chemise 503, le sixième orifice distal OD6 est en regard du conduit distal CD qui est passant. Ainsi, dans cette treizième configuration fluidique, le fluide peut être admis par le conduit distal CD et refoulé par les conduits proximal intermédiaire CR et proximal CP, ou inversement.

En référence aux figures 50, 50A, 50B, 50C et 50D, la chemise 503 est dans une quatorzième configuration fluidique dans laquelle le premier orifice proximal OP1 est en regard du conduit proximal CP qui est passant, le conduit proximal intermédiaire CR est obturé par la chemise 503, le premier orifice distal intermédiaire OS1 est en regard du conduit distal intermédiaire CS qui est passant, le premier orifice distal OD1 est en regard du conduit distal CD qui est passant. Ainsi, dans cette quatorzième configuration fluidique, le fluide peut être admis par les conduits distal CD et distal intermédiaire CS et refoulé par le conduit proximal CP, ou inversement.

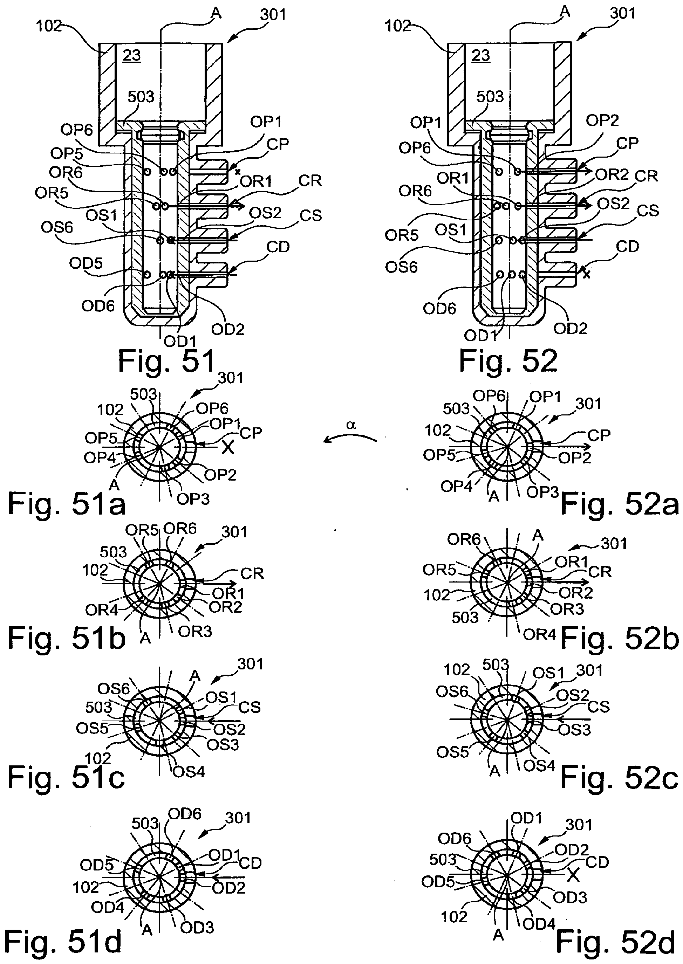

En référence aux figures 51, 51 A, 51 B, 51C et 51 D, la chemise 503 est dans une quinzième configuration fluidique dans laquelle le conduit proximal CP est obturé par la chemise 503, le premier orifice proximal intermédiaire OR1 est en regard du conduit proximal intermédiaire CR qui est passant, le second orifice distal intermédiaire OS2 est en regard du conduit distal intermédiaire CS qui est passant, le second orifice distal OD2 est en regard du conduit distal CD qui est passant. Ainsi, dans cette quinzième configuration fluidique, le fluide peut être admis par les conduits distal CD et distal intermédiaire CS et refoulé par le conduit proximal intermédiaire CR, ou inversement.

En référence aux figures 52, 52A, 52B, 52C et 52D, la chemise 503 est dans une seizième configuration fluidique dans laquelle le second orifice proximal OP2 est en regard du conduit proximal CP qui est passant, le second orifice proximal intermédiaire OR2 est en regard du conduit proximal intermédiaire CR qui est passant, le troisième orifice distal intermédiaire OS3 est en regard du conduit distal intermédiaire CS qui est passant, le conduit distal CD est obturé par la chemise 503. Ainsi, dans cette seizième configuration fluidique, le fluide peut être admis par le conduit distal intermédiaire CS et refoulé par les conduits proximal intermédiaire CR et proximal CP, ou inversement.

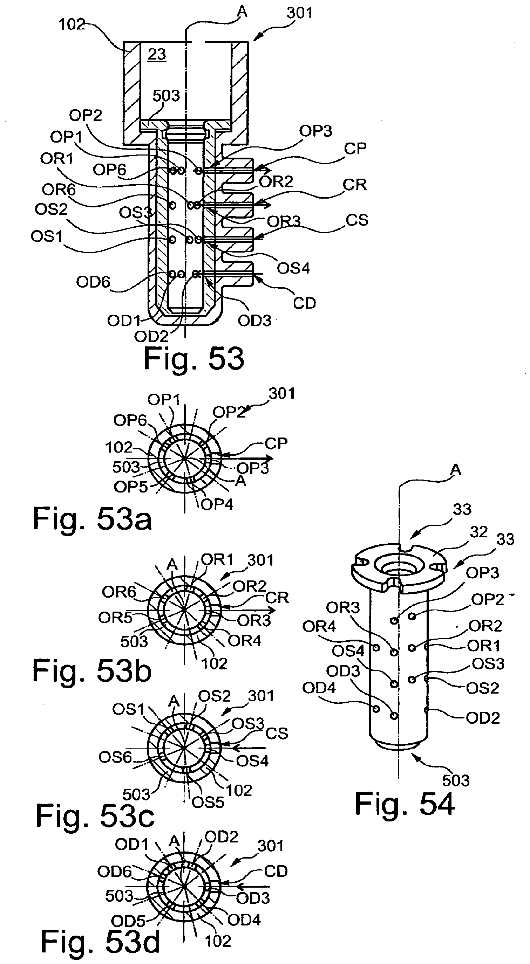

Enfin, en référence aux figures 53, 53A, 53B, 53C et 53D, la chemise 503 est dans une dix-septième configuration fluidique dans laquelle le troisième orifice proximal OP3 est en regard du conduit proximal CP qui est passant, le troisième orifice proximal intermédiaire OR3 est en regard du conduit proximal intermédiaire CR qui est passant, le quatrième orifice distal intermédiaire OS4 est en regard du conduit distal intermédiaire CS qui est passant, le troisième orifice distal OD3 est en regard du conduit distal CD qui est passant. Ainsi, dans cette dix-septième configuration fluidique, tous les conduits sont passant et le fluide peut être admis par les conduit distal CD et distal intermédiaire CS et refoulé par les conduits proximal intermédiaire CR et proximal CP, ou inversement.

Dans les exemples précédents, pour passer d'une configuration fluidique à la suivante, la chemise 503 a été tournée d'un angle α de 40° par rapport au corps 102 dans le sens antihoraire dans un sens d'observation distal.

La même chemise 503 permet ainsi neuf configurations fluidiques distinctes. Ce nombre peut bien entendu être inférieur.

Le sous-ensemble oscillo-rotatif selon l'invention peut bien entendu comporter des conduits additionnels et des orifices additionnels prévus respectivement dans le corps et la chemise, ces conduits et orifices additionnels étant prévus dans des plans radiaux intermédiaires aux plans radiaux précédemment décrits.

Le dispositif de pompage oscillo-rotatif selon l'invention comporte un sous-ensemble oscillo-rotatif 1, 101, 201, 301 tel que précédemment décrit dont le piston est mécaniquement couplé à des moyens d'entrainement de type connu. Ce couplage mécanique peut être réalisé au moyen de moyens de couplage mécanique amovibles permettant d'être facilement découplés du piston 4 ; 104 ; 204 ; 304. Ainsi, les moyens d'entrainement peuvent former un sous-ensemble réutilisable alors que le sous-ensemble oscillo-rotatif 1, 101, 201, 301 forme un sous-ensemble jetable. Le déplacement de la chemise 3 ; 103 ; 203 ; 303 ; 403 ; 503 entre les différentes configurations fluidiques peut être obtenu manuellement ou de manière motorisé par tout moyen connu coopérant avec les formes d'entrainement prévues sur la chemise 3 ; 103 ; 203 ; 303 ; 403 ; 503.

Avec le sous-ensemble oscillo-rotatif 1, 101, 201, 301 et le dispositif de pompage oscillo-rotatif selon l'invention, la mise en communication fluidique entre les conduits et la chambre de travail 5 est obtenue par l'intermédiaire de la chemise 3, 103, 203, 303, 403, 503. L'invention permet ainsi d'atteindre les objectifs précédemment mentionnés en augmentant, pour un nombre de conduits prédéterminé, le nombre de configurations fluidiques possibles tout en maintenant une simplicité, une compacité et un nombre de pièces réduites. Ainsi, moyennant un simple déplacement de la chemise 3, 103, 203, 303, 403, 503 dans le corps 2, 102, le dispositif oscillo-rotatif 1, 101, 201, 301 selon l'invention autorise différents raccordements fluidiques permettant des applications variées sans changer ni le corps 2, 102 ni le piston 4, 104, 204, 304 ni la chemise 3, 103, 203, 303, 403, 503 du dispositif oscillo-rotatif 1, 101, 201, 301.

Il va de soi que la présente invention ne saurait être limitée à la description qui précède d'un de ses modes de réalisation, susceptibles de subir quelques modifications sans pour autant sortir du cadre de l'invention, tel défini par l'objet respectif des revendications 1 à 10.

Ainsi, dans les exemples illustrés, la chemise est mobile angulairement par rapport au corps. De manière analogue, la chemise peut être prévue de sorte à pouvoir coulisser longitudinalement par rapport au corps, le changement d'une configuration fluidique à une autre intervenant alors par translation de la chambre dans le corps. Dans ce cas, les orifices utilisés d'une configuration fluidique à une autre seront alignés entre eux longitudinalement, l'écartement entre les orifices variant selon les communications fluidiques à assurer ou non. La translation et la rotation de la chemise par rapport au corps peuvent également être combinées. De plus, la chemise peut être prévue sans fond, sous la forme d'un fourreau ouvert en ses deux extrémités. Plusieurs options sont alors possibles. La paroi longitudinale de la chemise peut s'étendre jusqu'au fond du corps. La paroi longitudinale aussi peut être interrompue sous le conduit distal, le corps pouvant alors comporter un diamètre intérieur de section réduite limitant le volume mort autour du piston lorsque ce dernier est dans sa position distale. Dans cette seconde configuration, la chambre de travail est, au moins en partie délimitée directement par la paroi du corps.

Par ailleurs, dans les exemples illustrés le corps comporte au moins deux conduits proximaux et deux conduits distaux. Il est bien entendu que le multiplexage est possible avec un corps comportant deux conduits proximaux et un unique conduit distal, ou un unique conduit proximal et deux conduits distaux.

Enfin, les exemples illustrés portent sur un sous-ensemble oscillo-rotatif simple effet à étage unique. Selon des variantes de réalisation non représentées, le sous-ensemble oscillo-rotatif peut également présenter une configuration multi-effet. A cet effet, de manière communément admise, il comprendra plusieurs étages.

## Revendications

1. Sous-ensemble oscillo-rotatif (1 ; 101 ; 201 ; 301) pour pompage volumétrique d'un fluide, comportant un corps (2 ; 102) creux d'axe longitudinal (A) définissant au moins une cavité (25) et dont la paroi est traversée par des conduits (CPi, CRi, CSi, CDi), un piston (4 ; 104 ; 204 ; 304) logé dans ladite cavité (25) avec laquelle il définit une chambre de travail (5), ledit piston (4 ; 104 ; 204 ; 304) comportant sur sa périphérie au moins un évidement (43 ; 43P, 43D ; 143P, 143D ; 243P, 243D ; 343P, 343D) en communication fluidique avec ladite chambre de travail (5), ledit piston (4 ; 104 ; 204 ; 304) étant apte à être animé d'un mouvement oscillo-rotatif par rapport audit corps (2 ; 102) de sorte à être mobile angulairement entre différentes positions de fonctionnement dans chacune desquelles ledit évidement (43 ; 43P, 43D ; 143P, 143D ; 243P, 243D ; 343P, 343D) est ou non en regard d'au moins un desdits conduits (CPi, CRi, CSi, CDi) et en translation de sorte à faire varier le volume de ladite chambre de travail (5) pour successivement aspirer puis refouler ledit fluide, **caractérisé en ce que** ledit sous-ensemble oscillo-rotatif comporte une chemise (3 ; 103 ; 203 ; 303 ; 403 ; 503) mobile entre ledit piston (4 ;104 ;204 ;304) et ledit corps (2 ;102), **en ce que** la paroi de ladite chemise est traversée par des orifices (OPi, ORi, OSi, ODi), intercalée radialement entre ledit piston (4 ; 104 ; 204 ; 304) et ledit corps (2 ; 102), et apte à adopter dans ledit corps (2 ; 102), concomitamment à chaque position de fonctionnement, différentes configurations fluidiques successives dans chacune desquelles chaque conduit (CPi, CRi, CSi, CDi) est sélectivement non passant lorsque ladite chemise (3 ; 103 ; 203 ; 303 ; 403 ; 503) empêche la communication fluidique entre ladite chambre de travail (5) et ledit conduit (CPi, CRi, CSi, CDi) ou passant lorsqu'un orifice (OPi, ORi, OSi, ODi) de ladite chemise (3 ; 103 ; 203 ; 303 ; 403 ; 503) en regard dudit conduit (CPi, CRi, CSi, CDi) autorise la communication fluidique entre ladite chambre de travail (5) et ledit conduit (CPi, CRi, CSi, CDi).

2. Sous-ensemble oscillo-rotatif (1, 101, 201, 301) selon la revendication 1, **caractérisé en ce que** ladite chemise (3 ; 103 ; 203 ; 303 ; 403 ; 503) est pourvue de formes d'entrainement (43) destinées à être couplées à des moyens de réglage aptes à solliciter lesdites formes d'entrainement pour modifier la position angulaire et / ou longitudinale de ladite chemise (3 ; 103 ; 203 ; 303 ; 403 ; 503) par rapport audit corps (2 ; 102).

3. Sous-ensemble oscillo-rotatif (1, 101, 201, 301) selon la revendication 1, **caractérisé en ce que** le nombre desdits orifices (OPi, ORi, OSi, ODi) est supérieur au nombre desdits conduits (CPi, CRi, CSi, CDi).

4. Sous-ensemble oscillo-rotatif (1, 101, 201) selon la revendication 1, **caractérisé en ce que** ledit corps (2) comporte au moins deux conduits proximaux (CPi) situés dans un plan radial proximal (PP), au moins deux conduits distaux (CDi) situés dans un plan radial distal (DD) distinct dudit plan radial proximal (PP), **en ce que** ladite chemise (3 ; 103 ; 203 ; 303 ; 403) comporte des orifices proximaux (OPi) situés dans ledit plan radial proximal (PP) et angulairement décalés entre eux, et des orifices distaux (ODi) situés dans ledit plan radial distal (DD) et angulairement décalés entre eux.

5. Sous-ensemble oscillo-rotatif (1, 101, 201) selon la revendication 4, **caractérisé en ce que** lesdits conduits proximaux (CPi) et distaux (CDi) et lesdits orifices proximaux (OPi) et distaux (ODi) sont angulairement disposés de sorte que ladite chemise (3 ; 103 ; 203; 303; 403) puisse adopter successivement au moins deux des configurations fluidiques suivantes :
- une première et une cinquième configuration fluidique dans laquelle seul l'un desdits conduits proximaux (CPi) est passant, et seul l'un desdits conduits distaux (CDi) est passant,
- une seconde configuration fluidique dans laquelle chacun desdits conduits proximaux (CPi) est passant, et chacun desdits conduits distaux (CDi) est non passant,
- une troisième configuration fluidique dans laquelle chacun desdits conduits proximaux (CPi) est non passant, et chacun desdits conduits distaux (CDi) est passant,
- une quatrième configuration fluidique dans laquelle chacun desdits conduits proximaux (CPi) et distaux (CDi) est non passant,
- une sixième configuration fluidique dans laquelle seul l'un desdits conduits proximaux (CPi) est passant, et chacun desdits conduits distaux (CDi) est passant,
- une septième configuration fluidique dans laquelle chacun desdits conduits proximaux (CPi) est passant, et seul l'un desdits conduits distaux (CDi) est passant,
- une huitième configuration fluidique dans laquelle chacun desdits conduits proximaux (CPi) et distaux (CDi) est passant.

6. Sous-ensemble oscillo-rotatif (301) selon la revendication 1, **caractérisé en ce que** ledit corps (102) comporte au moins un conduit proximal (CPi) situé dans un plan radial proximal (PP), un conduit distal (CDi) situé dans un plan radial distal (DD) distinct dudit plan radial proximal (PP), un conduit proximal intermédiaire (CRi) et un conduit distal intermédiaire (CSi) situés respectivement dans un plan radial proximal intermédiaire (RR) et dans un plan radial distal intermédiaire (SS) prévus entre lesdits plans radiaux proximal (PP) et distal (DD), **en ce que** ladite chemise (503) comporte au moins des orifices proximaux (OPi) situés dans ledit plan radial proximal (PP), des orifices distaux (ODi) situés dans ledit plan radial distal (DD), des orifices intermédiaires proximaux (ORi) situés dans ledit plan intermédiaire radial (RR), des orifices intermédiaires distaux (OSi) situés dans ledit plan intermédiaire distal (SS).

7. Sous-ensemble oscillo-rotatif (1, 101, 201, 301) selon la revendication 6, **caractérisé en ce que** lesdits conduits proximal (CP), intermédiaire proximal (CR), intermédiaire distal (CS) et distal (CD) sont alignés longitudinalement entre eux.

8. Sous-ensemble oscillo-rotatif (301) selon la revendication 6, **caractérisé en ce que** lesdits conduits proximal (CP), intermédiaire proximal (CR), intermédiaire distal (CS) et distal (CD) et lesdits orifices proximal (OPi), intermédiaire proximal (ORi), intermédiaire distal (OSi) et distal (ODi) sont angulairement disposés de sorte que ladite chemise (503) puisse adopter successivement au moins deux des configurations fluidiques suivantes :
- une neuvième configuration fluidique dans laquelle chacun desdits conduits proximal (CP) et distal intermédiaire (CS) est non passant, et chacun desdits conduits proximal intermédiaire (CR) et distal (CD) est passant,
- une dixième configuration fluidique dans laquelle chacun desdits conduits proximal (CP) et distal intermédiaire (CS) est passant, et chacun desdits conduits proximal intermédiaire (CR) et distal (CD) est non passant,
une onzième configuration fluidique dans laquelle chacun desdits conduits proximal (CP) et distal (CD) est passant, et chacun desdits conduits proximal intermédiaire (CR) et distal intermédiaire (CS) est non passant,
une douzième configuration fluidique dans laquelle chacun desdits conduits proximal (CP) et distal (CD) est non passant, et chacun desdits conduits proximal intermédiaire (CR) et distal intermédiaire (CS) est passant,
une treizième configuration fluidique dans laquelle chacun desdits conduits proximal (CP), proximal intermédiaire (CR) et distal (CD) est passant et ledit conduit distal intermédiaire (CS) n'est pas passant,
une quatorzième configuration fluidique dans laquelle chacun desdits conduits proximal (CP), distal intermédiaire (CS) et distal (CD) est passant, et ledit conduit proximal intermédiaire (CR) n'est pas passant, une quinzième configuration fluidique dans laquelle chacun desdits conduits proximal (CP), proximal intermédiaire (CR) et distal intermédiaire (CS) est passant, et ledit conduit distal (CD) n'est pas passant,
- une seizième configuration fluidique dans laquelle chacun desdits conduits proximal (CP), proximal intermédiaire (CR), distal intermédiaire (CS) et distal (CD) est passant.

9. Dispositif de pompage oscillo-rotatif pour fluide, **caractérisé en ce qu'**il comporte des moyens d'entrainement, un sous-ensemble oscillo-rotatif (1, 101, 201, 301) pour pompage d'un fluide selon l'une quelconque des revendications précédentes et des moyens de couplage mécanique amovibles pour raccorder mécaniquement lesdits moyens d'entrainement audit piston (4 ; 104 ; 204 ; 304) de manière démontable.

10. Dispositif de pompage oscillo-rotatif selon la revendication 9, **caractérisé en ce qu'**il comporte un sous-ensemble oscillo-rotatif (1, 101, 201, 301) selon la revendication 2, et des moyens de réglage aptes à solliciter lesdites formes d'entrainement (43) pour modifier la position de ladite chemise (3 ; 103 ; 203 ; 303 ; 403 ; 503) par rapport audit corps (2 ; 102).

## Patentansprüche

1. Oszillierende und rotierende Unter-Einheit (1; 101; 201; 301) zum volumetrischen Pumpen eines Fluids, umfassend einen hohlen Korpus (2; 102) mit einer Längsachse (A), der wenigstens eine Kavität (25) definiert und dessen Wandung von Leitungen (CPi, CRi, CSi, CDi) durchsetzt ist, einen Kolben (4; 104; 204; 304), der in der Kavität (25) untergebracht ist, mit welcher er eine Arbeitskammer (5) definiert, wobei der Kolben (4; 104; 204; 304) an seinem Umfang wenigstens eine Ausnehmung (43; 43P, 43D; 143P, 143D; 243P, 243D; 343P, 343D) aufweist, die in Fluidverbindung mit der Arbeitskammer (5) steht, wobei der Kolben (4; 104; 204; 304) in der Lage ist, zu einer oszillierenden und rotierenden Bewegung in Bezug auf den Korpus (2; 102) derart, dass er bezüglich einer Winkelstellung zwischen verschiedenen Funktionspositionen beweglich ist, in jeder derselben die Ausnehmung (43; 43P, 43D; 143P, 143D; 243P, 243D; 343P, 343D) wenigstens einer der Leitungen (CPi, CRi, CSi, CDi) zugekehrt ist oder nicht, und zu einer translatorischen Bewegung derart, dass das Volumen der Arbeitskammer (5) veränderbar wird, um nacheinander das Fluid anzusaugen und dann auszustoßen, veranlasst zu werden,
**dadurch gekennzeichnet,**
**dass** die oszillierende und rotierende Unter-Einheit eine zwischen dem Kolben (4; 104; 204; 304) und dem Korpus (2; 102) bewegliche Hülse (3; 103; 203; 303; 403; 503) umfasst,
**dass** die Wandung der Hülse durch Öffnungen (OPi, ORi, OSi, ODi) durchsetzt ist, die radial zwischen dem Kolben (4; 104; 204; 304) und dem Korpus (2; 102) eingelegt sind, und die in der Lage ist, in dem Korpus (2; 102) zeitgleich zu jeder Funktionsposition verschiedene aufeinanderfolgende Fluidkonfigurationen anzunehmen, in jeder derselben jede Leitung (CPi, CRi, CSi, CDi) wahlweise nicht leitend, wenn die Hülse (3; 103; 203; 303; 403; 503) die Fluidverbindung zwischen der Arbeitskammer (5) und der Leitung (CPi, CRi, CSi, CDi) verhindert, oder leitend, wenn eine der Leitung (CPi, CRi, CSi, CDi) zugekehrte Öffnung (OPi, ORi, OSi, ODi) der Hülse (3; 103; 203; 303; 403; 503) die Fluidverbindung zwischen der Arbeitskammer (5) und der Leitung (CPi, CRi, CSi, CDi) zulässt, ist.

2. Oszillierende und rotierende Unter-Einheit (1, 101, 201, 301) nach Anspruch 1, **dadurch gekennzeichnet, dass** die Hülse (3; 103; 203; 303; 403; 503) mit Antriebsformen (43) versehen ist, die dazu bestimmt sind, mit Steuermitteln gekoppelt zu werden, die in der Lage sind, die Antriebsformen zu beaufschlagen, um die Winkelposition und/oder die Längsposition der Hülse (3; 103; 203; 303; 403; 503) in Bezug auf den Korpus (2, 102) zu verändern.

3. Oszillierende und rotierende Unter-Einheit (1, 101, 201, 301) nach Anspruch 1, **dadurch gekennzeichnet, dass** die Anzahl der Öffnungen (OPi, ORi, OSi, ODi) größer ist als die Anzahl der Leitungen (CPi, CRi, CSi, CDi).

4. Oszillierende und rotierende Unter-Einheit (1, 101, 201) nach Anspruch 1, **dadurch gekennzeichnet, dass** der Korpus (2) wenigstens zwei proximale Leitungen (CPi), die in einer proximalen radialen Ebene (PP) angeordnet sind, und wenigstens zwei distale Leitungen (CDi), die in einer von der proximalen radialen Ebene (PP) verschiedenen distalen radialen Ebene (DD) angeordnet sind, aufweist, und dass die Hülse (3; 103; 203; 303; 403) proximale Öffnungen (OPi), die in der proximalen radialen Ebene (PP) und winkelmäßig zueinander versetzt angeordnet sind, und distale Öffnungen (ODi), die in der distalen radialen Ebene (DD) angeordnet und winkelmäßig zueinander versetzt sind, aufweist.

5. Oszillierende und rotierende Unter-Einheit (1, 101, 201) nach Anspruch 4, **dadurch gekennzeichnet, dass** die proximalen (CPi) und distalen (CDi) Leitungen und die proximalen (OPi) und distalen (ODi) Öffnungen winkelmäßig derart angeordnet sind, dass die Hülse (3; 103; 203; 303; 403) sukzessive wenigstens zwei der folgenden Fluidkonfigurationen annehmen kann:
- eine erste und eine fünfte Fluidkonfiguration, in welcher nur eine der proximalen Leitungen (CPi) leitend ist und nur eine der distalen Leitungen (CDi) leitend ist,
- eine zweite Fluidkonfiguration, in welcher jede der proximalen Leitungen (CPi) leitend ist und jede der distalen Leitungen (CDi) nicht leitend ist,
- eine dritte Fluidkonfiguration, in welcher jede der proximalen Leitungen (CPi) nicht leitend ist und jede der distalen Leitungen (CDi) leitend ist,
- eine vierte Fluidkonfiguration, in welcher jede der proximalen (CPi) und der distalen (CDi) Leitungen nicht leitend ist,
- eine sechste Fluidkonfiguration, in welcher nur eine der proximalen (CPi) Leitungen leitend ist und jede der distalen (CDi) Leitungen leitend ist,
- eine siebte Fluidkonfiguration, in welcher jede der proximalen (CPi) Leitungen leitend ist und nur eine der distalen (CDi) Leitungen leitend ist,
- eine achte Fluidkonfiguration, in welcher jede der proximalen (CPi) und distalen (CDi) Leitungen leitend ist.

6. Oszillierende und rotierende Unter-Einheit (301) nach Anspruch 1, **dadurch gekennzeichnet, dass** der Korpus (102) wenigstens eine in einer proximalen radialen Ebene (PP) angeordnete proximale Leitung (CPi), eine in einer von der proximalen radialen Ebene (PP) verschiedenen distalen radialen Ebene (DD) angeordnete distale Leitung (CDi), eine intermediäre proximale Leitung (CRi) und eine intermediäre distale Leitung (CSi), die jeweils in einer intermediären proximalen radialen Ebene (RR) und einer intermediären distalen radialen Ebene (SS) angeordnet sind, die jeweils zwischen den proximalen (PP) und distalen (DD) radialen Ebenen angeordnet sind, umfasst, und dass die Hülse (503) wenigstens in der proximalen radialen Ebene (PP) angeordnete proximale Öffnungen (OPi), in der distalen radialen Ebene (DD) angeordnete distale Öffnungen (ODi), in der radialen intermediären Ebene (RR) angeordnete intermediäre proximale Öffnungen (ORi), in der distalen intermediären Ebene (SS) angeordnete intermediäre distale Öffnungen (OSi) umfasst.

7. Oszillierende und rotierende Unter-Einheit (1, 101, 201, 301) nach Anspruch 6, **dadurch gekennzeichnet, dass** die proximale (CP), intermediäre proximale (CR), intermediäre distale (CS) und distale (CD) Leitungen untereinander längs ausgerichtet sind.

8. Oszillierende und rotierende Unter-Einheit (301) nach Anspruch 6, **dadurch gekennzeichnet, dass** die proximale (CP), intermediäre proximale (CR), intermediäre distale (CS) und distale (CD) Leitungen und die proximale (OPi), intermediäre proximale (ORi), intermediäre distale (OSi) und distale (ODi) Öffnungen winkelmäßig derart angeordnet sind, dass die Hülse (503) sukzessive wenigstens zwei der nachfolgenden Fluidkonfigurationen annehmen kann:
- eine neunte Fluidkonfiguration, in welcher jede der proximalen (CP) und intermediären distalen (CS) Leitungen nicht leitend ist und jede der intermediären proximalen (CR) und distalen (CD) Leitungen leitend ist,
- eine zehnte Fluidkonfiguration, in welcher jede der proximalen (CP) und intermediären distalen (CS) Leitungen leitend ist und jede der intermediären proximalen (CR) und distalen (CD) Leitungen nicht leitend ist,
- eine elfte Fluidkonfiguration, in welcher jede der proximalen (CP) und distalen (CD) Leitungen leitend ist und jede der intermediären proximalen (CR) und intermediären distalen (CS) Leitungen nicht leitend ist,
- eine zwölfte Fluidkonfiguration, in welcher jede der proximalen (CP) und distalen (CD) Leitungen nicht leitend ist und jede der intermediären proximalen (CR) und intermediären distalen (CS) Leitungen leitend ist,
- eine dreizehnte Fluidkonfiguration, in welcher jede der proximalen (CP), intermediären proximalen (CR) und distalen (CD) Leitungen leitend ist und die intermediäre distale (CS) Leitung nicht leitend ist.
- eine vierzehnte Fluidkonfiguration, in welcher jede der proximalen (CP), intermediären distalen (CS) und distalen (CD) Leitungen leitend ist und die intermediäre proximale (CR) Leitung nicht leitend ist,
- eine fünfzehnte Fluidkonfiguration, in welcher jede der proximalen (CP), intermediären proximalen (CR) und intermediären distalen (CS) Leitungen leitend ist und die distale (CD) Leitung nicht leitend ist,
- eine sechzehnte Fluidkonfiguration, in welcher jede der proximalen (CP), intermediären proximalen (CR), intermediären distalen (CS) und distalen (CD) Leitungen leitend ist.

9. Oszillierende und rotierende Pumpeinrichtung für Fluide, **dadurch gekennzeichnet, dass** sie Antriebsmittel, eine oszillierende und rotierende Unter-Einheit (1, 101, 201, 301) zum Pumpen eines Fluids gemäß einem der vorhergehenden Ansprüche und lösbare mechanische Kopplungsmittel zum mechanischen Verbinden der Antriebsmittel mit dem Kolben (4; 104; 204; 304) auf demontierbare Weise aufweist.

10. Oszillierende und rotierende Pumpeinrichtung nach Anspruch 9, **dadurch gekennzeichnet, dass** sie eine oszillierende und rotierende Unter-Einheit (1, 101, 201, 301) nach Anspruch 2 und Steuermittel, die in der Lage sind, die Antriebsformen (43) zum Verändern der Position der Hülse (3; 103; 203; 303; 403; 503) in Bezug auf den Korpus (2; 102) zu beaufschlagen, umfasst.

## Claims

1. A reciprocating and rotary subassembly (1; 101; 201; 301) for positive displacement pumping of a fluid, which subassembly includes a hollow body (2; 102) of longitudinal axis (A) defining at least one cavity (25) and having its wall provided with through ducts (CPi, CRi, CSi, CDi), a piston (4; 104; 204; 304) received in said cavity (25), with which it co-operates to define a working chamber (5), said piston (4; 104; 204; 304) having, in its periphery, at least one recess (43; 43P, 43D; 143P, 143D; 243P, 243D; 343P, 343D) in fluid-flow communication with said working chamber (5), said piston (4; 104; 204; 304) being suitable for being moved in reciprocating and rotary manner relative to said body (2; 102) so as to be movable angularly between different operating positions, in each of which said recess (43; 43P, 43D; 143P, 143D, 243P, 243D; 343P, 343D) is facing or not facing at least one of said ducts (CPi, CRi, CSi, CDi), and so as to be movable in translation in such a manner as to cause the volume of said working chamber (5) to vary so as to suck in and then deliver said fluid successively, said reciprocating and rotary subassembly being **characterized in that** it further includes a sleeve (3; 103; 203; 303; 403; 503) mounted to be movable between said piston (4; 104; 204; 304) and said body (2; 102), and **in that** the wall of said sleeve is provided with through orifices (OPi, ORi, OSi, ODi), which sleeve is interposed radially between said piston (4; 104; 204; 304) and said body (2; 102), and is suitable for taking up different successive fluid-flow configurations in said body (2; 102) and in association with each operating position, in each of which fluid-flow configurations each duct (CPi, CRi, CSi, CDi) is selectively closed when said sleeve (3; 103; 203; 303; 403; 503) prevents fluid-flow communication between said working chamber (5) and said duct (CPi, CRi, CSi, CDi) or open when an orifice (OPi, ORi, OSi, ODi) of said sleeve (3; 103; 203; 303; 403; 503) facing said duct (CPi, CRi, CSi, CDi) allows fluid-flow communication to take place between said working chamber (5) and said duct (CPi, CRi, CSi, CDi).

2. A reciprocating and rotary subassembly (1, 101, 201, 301) according to claim 1, **characterized in that** said sleeve (3; 103; 203; 303; 403; 503) is provided with drive shapes (43) designed to be coupled to adjustment means suitable for urging said drive shapes so as to change the angular and/or longitudinal position of said sleeve (3; 103; 203; 303; 403; 503) relative to said body (2; 102).

3. A reciprocating and rotary subassembly (1, 101, 201, 301) according to claim 1, **characterized in that** the number of said orifices (OPi, ORi, OSi, ODi) is greater than the number of said ducts (CPi, CRi, CSi, CDi).

4. A reciprocating and rotary subassembly (1, 101, 201) according to claim 1, **characterized in that** said body (2) is provided with at least two proximal ducts (CPi) situated in a proximal radial plane (PP), with at least two distal ducts (CDi) situated in a distal radial plane (DD) distinct from said proximal radial plane (PP), **in that** said sleeve (3; 103; 203; 303; 403) is provided with proximal orifices (OPi) situated in said proximal radial plane (PP) and angularly offset mutually, and with distal orifices (ODi) situated in said distal radial plane (DD) and angularly offset mutually.

5. A reciprocating and rotary subassembly (1, 101, 201) according to claim 4, **characterized in that** said proximal and distal ducts (CPi, CDi) and said proximal and distal orifices (OPi, ODi) are angularly disposed such that said sleeve (3; 103; 203; 303; 403) can successively take up at least two of the following fluid-flow configurations:
· a first and a fifth fluid-flow configuration in which only one of said proximal ducts (CPi) is open, and only one of said distal ducts (CDi) is open;
· a second fluid-flow configuration in which each of said proximal ducts (CPi) is open, and each of said distal ducts (CDi) is closed;
· a third fluid-flow configuration in which each of said proximal ducts (CPi) is closed, and each of said distal ducts (CDi) is open;
· a fourth fluid-flow configuration in which each of said proximal ducts (CPi) and each of said distal ducts (CDi) is closed;
· a sixth fluid-flow configuration in which each of said proximal ducts (CPi) is open, and each of said distal ducts (CDi) is open;
· a seventh fluid-flow configuration in which only one of said proximal ducts (CPi) is open, and only one of said distal ducts (CDi) is open; and
· an eighth fluid-flow configuration in which each of said proximal ducts (CPi) and each of said distal ducts (CDi) is open.

6. A reciprocating and rotary subassembly (301) according to claim 1, **characterized in that** said body (102) has at least: a proximal duct (CPi) situated in a proximal radial plane (PP); a distal duct (CDi) situated in a distal radial plane (DD) distinct from said proximal radial plane (PP); and an intermediate proximal duct (CRi) and an intermediate distal duct (CSi), which intermediate ducts are situated respectively in an intermediate proximal radial plane (RR) and in an intermediate distal radial plane (SS) that are provided between said proximal radial plane (PP) and said distal radial plane (DD); **in that** said sleeve (503) is provided with at least: proximal orifices (OPi) situated in said proximal radial plane (PP); distal orifices (ODi) situated in said distal radial plane (DD); proximal intermediate orifices (ORi) situated in said radial intermediate plane (RR); and distal intermediate orifices (OSi) situated in said distal intermediate plane (SS).

7. A reciprocating and rotary subassembly (1, 101, 201, 301) according to claim 6, **characterized in that** said proximal duct (CP), said proximal intermediate duct (CR), said distal intermediate duct (CS), and said distal duct (CD) are mutually aligned longitudinally.

8. A reciprocating and rotary subassembly (301) according to claim 6, **characterized in that** said proximal, proximal intermediate, distal intermediate, and distal ducts (CP, CR, CS, CD), and said proximal, proximal intermediate, and distal orifices (CPi, OSi, ODi) are angularly superposed in such manner that said sleeve (503) can successively take up at least two of the following fluid-flow configurations:
· a ninth fluid-flow configuration in which each of said proximal and intermediate distal ducts (CD, CS) is closed, and each of said intermediate proximal and distal ducts (CR, CD) is open;
· a tenth fluid-flow configuration in which each of said proximal and intermediate distal ducts (CP, CS) is open, and each of said intermediate proximal and distal ducts (CR, CD) is closed;
· an eleventh fluid-flow configuration in which each of said proximal and distal ducts (CP, CD) is open, and each of said intermediate proximal and intermediate distal ducts (CR, CS) is closed;
· a twelfth fluid-flow configuration in which each of said proximal and distal ducts (CP, CD) is closed, and each of said intermediate proximal and intermediate distal ducts (CR, CS) is open;
· a thirteenth fluid-flow configuration in which each of said proximal, intermediate proximal, and distal ducts (CP, CR, CD) is open, and said intermediate distal duct (CS) is closed;
· a fourteenth fluid-flow configuration in which each of said proximal, intermediate distal, and distal ducts (CP, CS, CD) is open, and said intermediate proximal duct (CR) is closed;
· a fifteenth fluid-flow configuration in which each of said proximal, intermediate proximal, and intermediate distal ducts (CP, CR, CS) is open, and said distal duct (CD) is closed; and
· a sixteenth fluid-flow configuration in which each of said proximal, intermediate proximal, intermediate distal, and distal ducts (CP, CR, CS, CD) is open.

9. A reciprocating and rotary pumping device for fluid, said reciprocating and rotary pumping device being **characterized in that** it includes drive means, a reciprocating and rotary subassembly (1, 101, 201, 301) for pumping a fluid according to any preceding claim, and removable mechanical coupling means for mechanically coupling said drive means to said piston (4; 104, 204, 304) in disassemblable manner.

10. A reciprocating and rotary pumping device according to claim 9, **characterized in that** it includes a reciprocating and rotary subassembly (1, 101, 201, 301) according to claim 2, and adjustment means suitable for urging said drive shapes (43) to change the position of said sleeve (3; 103; 203; 303; 403; 503) relative to said body (2; 102).
